Europäisches Patentamt

European Patent Office

Office européen des brevets

(19)

(11) EP 0 604 868 B1

(12) # EUROPEAN PATENT SPECIFICATION

(45) Date of publication and mention
of the grant of the patent:
**12.03.1997 Bulletin 1997/11**

(51) Int Cl.6: **F01N 3/20**, H05B 3/10

(21) Application number: **93120509.0**

(22) Date of filing: **20.12.1993**

(54) **Electrically heating catalytic apparatus**

Elektrisch beheizbarer Katalysator

Catalyseur chauffé électriquement

(84) Designated Contracting States:
**DE FR GB**

(30) Priority: **21.12.1992 JP 340614/92**
**24.03.1993 JP 65620/93**
**11.06.1993 JP 140854/93**
**11.06.1993 JP 140855/93**

(43) Date of publication of application:
**06.07.1994 Bulletin 1994/27**

(73) Proprietors:
- **TOYOTA JIDOSHA KABUSHIKI KAISHA**
  **Aichi-ken (JP)**
- **NIPPON SOKEN, INC.**
  **Nishio-shi Aichi-Ken (JP)**

(72) Inventors:
- **Yoshizaki, Kouji, c/o Toyota Jidosha K. K.**
  **Toyota-shi, Aichi (JP)**
- **Itou, Takaaki, c/o Toyota Jidosha K. K.**
  **Toyota-shi, Aichi (JP)**
- **Hirayama, Hiroshi, c/o Toyota Jidosha K. K.**
  **Toyota-shi, Aichi (JP)**
- **Nagami, Tetsuo, c/o Toyota Jidosha K. K.**
  **Toyota-shi, Aichi (JP)**
- **Sanada, Masakatsu, c/o Toyota Jidosha K. K.**
  **Toyota-shi, Aichi (JP)**

- **Watanabe, Kiyohiko**
  **Okazaki-shi, Aichi (JP)**
- **Fujishiro, Osamu, Higashi Sakura Building 306**
  **Nagoya-shi, Aichi (JP)**
- **Yoshinaga, Tohru**
  **Okazaki-shi, Aichi (JP)**
- **Shinohara, Yukihiro, City Corp Anjo**
  **Anjo-shi, Aichi (JP)**
- **Kawabe, Yasuyuki**
  **Okazaki-shi, Aichi (JP)**
- **Igashira, Toshihiko**
  **Toyokawa-shi, Aichi (JP)**
- **Izawa, Akihiro**
  **Nukata-gun, Aichi (JP)**
- **Ichikawa, Hiroaki**
  **Okazaki-shi, Aichi (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**80336 München (DE)**

(56) References cited:
| | |
|---|---|
| **EP-A- 0 452 125** | **EP-A- 0 456 919** |
| **EP-A- 0 503 445** | **WO-A-89/10471** |
| **WO-A-92/18245** | **US-A- 4 160 897** |

## Description

The present invention relates to a catalytic apparatus for purifying exhaust gas from an internal combustion engine of, for example, an automobile, and particularly, to an improvement of an electrically heating catalytic apparatus that quickly heats catalyst to an activation temperature even when the engine is started at a low temperature below the catalyst activation temperature.

A metallic catalyst carrier or support is formed by laminating metal sheets into a honeycomb structure. The carrier is coated with, for example, activated alumina, and the coat holds catalyst made of, for example, precious metal such as platinum. The carrier serves as a catalytic converter for purifying exhaust gas from an internal combustion engine. Just after the start of the engine, the temperature of the catalyst is too low to activate the catalyst and purify exhaust gas. At this time, the carrier is energized to generate heat to quickly increase the temperature thereof up to the catalyst activation temperature of about 350 degrees centigrade, to thereby start the exhaust gas purifying reactions as soon as possible after the start of the engine. An example of such an electrically heating catalytic apparatus is disclosed in Japanese Unexamined Patent Publication No. 3-72953. The disclosure winds thin metal sheets around a core toward an outer casing, to thereby form a catalyst carrier. The disclosure electrically heats the whole of the catalyst carrier, so that it requires a large quantity of energy.

A similarly structured catalytic apparatus is described in the WO 92/18245 wherefrom the present invention proceeds. Accordingly, a multiplicity of bridges each mechanically and electrically connect a respective two of the adjacent and spaced-apart windings. The bridges primarily serve to strengthen the mechanical structure of the honeycomb body. The windings and the bridges form a current path for an electric current flowing between the inner region and the outer region such that an especially strongly branched network of electric resistors is formed, as a result of which the adequately homogeneous heating of the honeycomb body can be assured.

It is an object of the present invention to provide a catalytic apparatus which can quickly achieve the activation temperature of the catalyst wherein the power consumption for energizing the catalytic apparatus is reduced.

The present invention provides a catalytic apparatus according to claim 1.

Accordingly, an electrically heating catalytic apparatus employs an electrically conductive catalyst carrier that is electrically heated. The carrier is provided with local hot spots to be energized. The local hot spots collect a current to generate heat. This arrangement reduces the power consumption. Since the heat is locally generated, the heat capacity of the catalyst carrier is small to shorten a temperature increasing time. The local hot spots are arranged on an upstream side of the catalyst carrier. Accordingly, the catalyst on the down stream side where no hot spots are arranged is sufficiently heated by the heat of the catalytic reactions at the electrically heated part via the heat and flow of the exhaust, thereby reducing the power consumption and securing the catalytic reactions.

The catalytic apparatus may be provided with the following advantageous features.

The local hot spots may be arranged on the upstream side of the catalyst carrier in an exhaust path of an internal combustion engine.

The local hot spots may be arranged away from an exhaust inlet end of the catalyst carrier.

The local hot spots are arranged away from an exhaust inlet end, so that the heating capacity of the catalyst carrier will not be deteriorated due to contaminants contained in exhaust.

The catalyst carrier may be prepared by alternately laminating metal sheets and insulation layers, and the local hot spots are made by partly electrically joining the metal sheets.

The metal sheets are partly joined through the insulation layer, so that the metal sheets may not be easily dislocated.

The local hot spots may be formed as a local current path made by continuously electrically connecting electrodes to each other.

The electrodes are continuously joined to each other, so that the metal sheets between the electrodes may not be easily dislocated. The whole of the current paths generate heat.

The catalyst carrier may be made of corrugated and flat metal sheets each having a surface insulation layer, and the corrugated sheet is made flat at joints of the hot spots.

Flat parts are formed on the corrugated sheet, the flat parts being advantageous to easily form the local hot spots.

The catalyst carrier may be made of corrugated and flat metal sheets each having a surface insulation layer, and flat strips are inserted between the corrugated and flat sheets at joints of the local hot spots.

A flat strip is overlayed on each joint, so that the joint is easily formed to provide a hot spot.

The catalyst carrier may be provided with inner spaces adjacent to the local hot spots.

Inner spaces are provided adjacent to the local hot spots, the inner spaces absorbing the thermal expansion of the local hot spots, to improve the durability of the catalytic converter.

The catalyst carrier may be prepared by alternately winding metal sheets and insulation layers around a center electrode. The carrier is stored in a metal casing serving as the other electrode. The local hot spots are locally formed at axial positions on the carrier so that the carrier and the casing are connected to each other only through the axial positions.

The outer casing serving as an electrode is connected with the catalyst carrier only through the local hot spots, to collect a current to the local hot spots.

The catalyst carrier may be formed by alternately winding metal sheets and insulation layers around a center electrode. The carrier is stored in a metal casing serving as the other electrode. The local hot spots are locally formed at axial positions on the carrier so that the metal sheets and the center electrode are connected to each other only through the axial positions.

The center electrode is connected with the catalyst carrier only through the local hot spots, to collect a current to the local hot spots.

An insulation section may be formed in the middle of the center electrode so that no current flows from the axial positions where the local hot spots are formed toward a downstream side viewed from a connection between the center electrode and a power source. The metal sheets and center electrode are connected to each other only through the axial positions.

An insulated part is formed in the middle of the center electrode, so that no current may flow to the downstream side of the electrode from the insulated part, and a current may be easily collected to the local hot spots. Since a long part of the center electrode axially extends in the catalyst carrier, the metal sheets are easily connected to and wound around the center electrode.

The catalyst carrier may be prepared by combining flat and corrugated metal sheets into a band, coating the band with an insulation layer, and winding the band. The local hot spots are formed by partly electrically joining the layers of the band to each other. The positions of the joints between the corrugated and flat sheets and the area of each of the joints are optionally selected.

The local hot spots is formed with a combination of corrugated and flat sheets. The positions and areas of joints between the corrugated and flat sheets may be changed to change the resistance of the local hot spots, to thereby provide the catalytic converter with a required resistance value.

The catalyst carrier may be prepared by combining flat and corrugated metal sheets into a band and coating the band with an insulation layer. The band is wound around the center electrode with valleys of an outermost layer of the corrugated sheet being electrically joined with an adjacent layer of the band, to form the local hot spots.

A combination of corrugated and flat sheets is wound around the center electrode with the corrugated sheet being outside. Accordingly, adjacent layers of the sheets are easily joined with each other by joining them from valleys of the outermost corrugated layer.

The catalyst carrier may be prepared by combining flat and corrugated metal sheets into a band, coating the band with an insulation layer, and winding the band. The layers of the band are locally electrically joined with one other from the outside, to form the local hot spots. An outside one of the corrugated and flat sheets is cut at the positions of the local hot spots.

An outer one of the corrugated and flat sheets is cut at the positions of the local hot spots, so that the adjacent sheets are easily joined with each other from the outside.

The metal sheets on each side of the local hot spots may be provided with insulation layers.

Insulation parts (slits) are formed on the metal sheets on each side of the local hot spots, so that a current is not diffused to the periphery of the catalyst carrier due to the insulation parts. Namely, the current collects to the local hot spots to easily generate heat.

The catalyst carrier may be prepared by alternately laminating corrugated and flat metal sheets each having a surface insulation layer. The adjacent corrugated and flat sheets of the carrier are electrically partly joined with each other to form the local hot spots.

The local hot spots are formed by partly electrically joining the corrugated and flat sheets. Compared with joining two corrugated sheets and a flat sheet, this structure provides smaller heat capacity and shorter temperature increasing time.

The local hot spots may be distributed. Among the distributed hot spots, those closest to the electrodes are electrically connected to the electrodes.

The hot spots closest to the electrodes are electrically connected to the electrodes, so that the hot spots are directly short-circuited to the electrodes. This results in reducing uncertain factors in electric resistance between the hot spots and the electrodes, so that the resistance of the catalyst carrier as a whole may be easily set to a required value.

The local hot spots may be distributed. The lengths of the hot spots in the axial direction of the catalyst carrier are changed depending on the positions of the hot spots in the carrier.

The lengths of the local hot spots are changed according to the positions thereof, so that the hot spots may be formed at optional positions and provide optional heat quantities.

The catalyst carrier may be prepared by combining corrugated and flat metal sheets into a band. The number of joints between the corrugated and flat sheets in the vicinity of the local hot spots is smaller than that of the other parts, to provide a soft structure.

The corrugated and flat sheets are joined in the vicinity of the local hot spots such that they have a soft structure compared with the remaining part where no hot spots are formed. The thermal stress at the local hot spots is sufficiently absorbed, and the metal sheets at the parts where no hot spots are formed are hardly dislocated.

The length of each of the local hot spots may be very short in the direction of an exhaust flow in the exhaust path of the engine compared with the length of the catalyst carrier in the same direction.

The local hot spots that are very short are formed in the direction of an exhaust flow. Compared with hot spots having the same heat capacity but being longer in the exhaust flow direction, the hot spots of this structure have each a wider cross-sectional area orthogonal to the exhaust flow, to provide an increased contact area with exhaust of high temperature, to thereby shortening a temperature increase time.

The catalyst carrier may be provided with slits oriented in the direction of the exhaust flow so that the remaining parts of the carrier may form the local hot spots.

A current is collected to the remaining part of the slits, to locally generate heat thereat.

The catalyst carrier may be made by alternately laminating metal sheets and insulation layers, the slits are formed at non-contact parts with respect to adjacent layers, and the insulation layers are inserted into the slits.

The slits are formed at noncontact parts with respect to adjacent metal sheets. This results in avoiding stress acting on a part where the adjacent metal sheets overlay and contact with each other. Since the insulation film laminated with the metal sheets is inserted into the slits, the strength of the catalyst carrier will not be deteriorated due to the slits.

BRIEF DESCRIPTION OF THE DRAWINGS

Fig. 1 is a perspective view showing a catalyst carrier according to a first embodiment of the present invention;
Fig. 2 is a longitudinal section showing the carrier of Fig. 1;
Fig. 3 is a perspective view explaining a process of fabricating the carrier of Fig. 1;
Fig. 4 is a general longitudinal section showing a catalytic apparatus;
Fig. 5 is a longitudinal section showing the operation of the carrier according to the first embodiment;
Fig. 6 is a characteristic diagram showing the effect of the first embodiment;
Fig. 7 is a plan view showing a catalyst carrier according to a second embodiment of the present invention;
Fig. 8 is a longitudinal section showing the operation of the second embodiment;
Fig. 9 is a plan view showing a catalyst carrier according to a third embodiment of the present invention;
Fig. 10 is a plan view showing a catalyst carrier according to a fourth embodiment of the present invention;
Fig. 11 is a plan view showing a catalyst carrier according to a fifth embodiment of the present invention;
Fig. 12(a) is a longitudinal section showing a catalyst carrier according to a sixth embodiment of the present invention;
Fig. 12(b) is a plan view showing the carrier of the sixth embodiment;
Fig. 13 is a perspective view showing a process of fabricating a catalyst carrier according to a seventh embodiment of the present invention;
Fig. 14 is a plan view showing the carrier of the seventh embodiment;
Fig. 15 is a perspective view showing a catalyst carrier according to an eighth embodiment of the present invention;
Fig. 16 is a perspective view showing a catalyst carrier according to a modification of the eighth embodiment;
Fig. 17 is a perspective view showing a catalyst carrier according to a ninth embodiment of the present invention;
Fig. 18 is an enlarged perspective view showing a part of Fig. 17;
Fig. 19 is a plan view showing a catalyst carrier according to a modification of the ninth embodiment;
Fig. 20 is a partly broken perspective view showing a catalyst carrier according to a 10th embodiment of the present invention;
Fig. 21 is a view showing a current flowing through partly joined parts of the embodiment of Fig. 20;
Fig. 22 is a view showing a current flowing through locally joined parts of the embodiment of Fig. 20;
Fig. 23 is a longitudinal section showing the embodiment of Fig. 20;
Fig. 24 is a view showing corrugated and flat metal sheets wound into alternate spiral shapes around a positive electrode, to form the honeycomb catalyst carrier of Fig. 20;
Fig. 25 is a graph showing a relationship between a distance from an upstream end and exhaust purifying capacity in an electrically heating catalytic apparatus;
Fig. 26 is a plan view showing a catalyst carrier according to an 11th embodiment of the present invention with hot spots being located around a diametral center;
Fig. 27 is a plan view showing a catalyst carrier according to a 12th embodiment of the present invention with flat and corrugated sheets being entirely joined together to reduce resistance except for a diametral intermediate annular heat generation area;
Fig. 28 is an enlarged view showing the flat and corrugated sheets entirely joined together of the embodiment of Fig. 27;
Fig. 29 is a plan view showing a catalyst carrier according to a 13th embodiment of the present invention with cross hot spot areas being formed around a center electrode;

Fig. 30 is a sectional view taken along a line A-A of Fig. 29;

Fig. 31(a) is a longitudinal section showing a catalyst carrier according to a 14th embodiment of the present invention with cross hot spot areas formed around a center electrode on a downstream end face of the carrier;

Fig. 31(b) is a plan view showing the 14th embodiment;

Fig. 32 is a partly broken perspective view showing a catalyst carrier according to a 15th embodiment of the present invention with a plurality of hot spots being formed in the direction of an exhaust flow;

Fig. 33 is a sectional view taken along a line A-A of Fig. 32;

Fig. 34 is a perspective view showing a catalyst carrier according to a 16th embodiment of the present invention with corrugated sheets having axial slits to generate heat at the remaining parts;

Fig. 35 is a longitudinal section showing the completed carrier according to the 16th embodiment;

Fig. 36 is a view showing a catalyst carrier according to a 17th embodiment of the present invention with a corrugated sheet being partly flattened;

Fig. 37 is a view showing a catalyst carrier according to an 18th embodiment of the present invention with flat strips being interposed between corrugated and flat sheets;

Fig. 38 is a perspective view showing a honeycomb ceramic catalyst carrier according to a 19th embodiment of the present invention with a tungsten heat generation wire;

Fig. 39 is a sectional view taken along a line A-A of Fig. 38;

Fig. 40 is a front view showing a catalyst carrier of an electrically heating catalytic converter according to a 20th embodiment of the present invention;

Fig. 41 is a sectional view taken along a line A-A of Fig. 40;

Fig. 42 is a front view showing a catalyst carrier of an electrically heating catalytic converter according to a 21st embodiment of the present invention;

Fig. 43 is a sectional view taken along a line C-C of Fig. 42;

Fig. 44 is a sectional view taken along a line B-B of Fig. 41;

Fig. 45 is a sectional view taken along a line D-D of Fig. 43;

Fig. 46 is a sectional view taken along a line E-E of Fig. 43;

Fig. 47 is a longitudinal section showing an electrically heating catalytic converter according to a 22nd embodiment of the present invention;

Fig. 48 is a front view showing a part of a catalyst carrier of the 22nd embodiment;

Fig. 49 is an enlarged view showing a part of Fig. 48;

Fig. 50 is a circuit diagram showing an equivalent circuit of the 22nd embodiment;

Fig. 51 is a front view showing a part of an electrically heating catalytic converter according to a 23rd embodiment of the present invention;

Fig. 52 is a view showing a process of fabricating an electrically heating catalytic converter according to a 24th embodiment;

Fig. 53(a) is a front view explaining joints between metal sheets of the 24th embodiment;

Fig. 53(b) is an enlarged view showing a part of Fig. 53(a);

Fig. 54 is a view showing a process of laser-welding the metal sheets of the 24th embodiment;

Fig. 55(a) is a front view showing an electrically heating catalytic converter according to a 25th embodiment of the present invention;

Fig. 55(b) is a longitudinal section of the 25th embodiment;

Fig. 56 is a longitudinal section showing a modification of the 25th embodiment;

Fig. 57 is a front view showing an electrically heating catalytic converter according to a 26th embodiment of the present invention;

Figs. 58(a) and 58(b) are views showing equivalent circuits of a heat generating section of a catalytic converter;

Fig. 59 is a perspective view showing a combination of flat and corrugated sheets according to a 27th embodiment of the present invention;

Fig. 60 is a view showing a process of laser-welding metal sheets of an electrically heating catalytic converter according to the 27th embodiment;

Fig. 61(a) is a view showing a cut formed on the metal sheet of the 27th embodiment;

Fig. 61(b) is a process of laminating the metal sheets of the 27th embodiment;

Fig. 61(c) is a view showing a laser welding process;

Fig. 62 is a perspective view showing part of metal sheets of an electrically heating catalytic converter according to a 28th embodiment of the present invention;

Fig. 63(a) is a view explaining a flow of a current according to the 28th embodiment with no cuts;

Fig. 63(b) is a view explaining a flow of a current according to the 28th embodiment with cuts;

Fig. 64 is a longitudinal section showing an electrically heating catalytic converter according to a 29th embodiment of the present invention;

Fig. 65 is a circuit diagram showing an equivalent circuit of a heat generation section of the 29th embodiment;

Fig. 66 is a perspective view showing a flat sheet according to the 29th embodiment;

Fig. 67 is a perspective view showing a corrugated sheet according to the 29th embodiment;

Fig. 68 is a longitudinal section showing an electrically heating catalytic converter according to a 30th embodiment of the present invention;

Fig. 69 is a perspective view showing a flat sheet according to the 30th embodiment;

Fig. 70 is a perspective view showing a corrugated sheet according to the 30th embodiment;

Fig. 71 is a longitudinal section showing an electrically heating catalytic converter according to a 31st embodiment of the present invention;

Fig. 72 is an extended view showing a metal sheet according to the 31st embodiment;

Fig. 73(a) is a perspective view showing an electrically heating catalytic converter according to a 32nd embodiment of the present invention;

Fig. 73(b) is a view showing metal sheets of a rigid structure according to the 32nd embodiment;

Fig. 73(c) is a view showing metal sheets of a soft structure according to the 32nd embodiment;

Fig. 74 is a longitudinal section showing an electrically heating catalytic converter according to a 33rd embodiment of the present invention;

Fig. 75(a) is a longitudinal section showing an electrically heating catalytic converter according to a 34th embodiment of the present invention;

Fig. 75(b) is a view showing a part of a center electrode according to the 34th embodiment;

Fig. 75(c) is a longitudinal section showing a modification of the 34th embodiment;

Fig. 76 is a view showing a state of jointing metal sheets of an electrically heating catalytic converter according to a 35th embodiment of the present invention;

Fig. 77 is a perspective sectional view showing a part of an upstream end of an electrically heating catalytic converter according to a 36th embodiment of the present invention;

Fig. 78 is a graph showing a relationship between the length of a hot spot and the resistance thereof;

Fig. 79 is a graph showing a relationship between the heat quantity of a hot spot and an optimum distance;

Fig. 80(a) is a front view showing an electrically heating catalytic converter according to a 37th embodiment of the present invention;

Fig. 80(b) is a longitudinal section showing the 37th embodiment;

Fig. 80(c) is a longitudinal section showing a modification of the 37th embodiment;

Fig. 81 is a front view showing an electrically heating catalytic converter according to a 38th embodiment of the present invention;

Fig. 82(a) is a front view showing an electrically heating catalytic converter according to a 39th embodiment of the present invention;

Fig. 82(b) is a longitudinal section showing the 39th embodiment;

Fig. 83 is a view showing an extended metal sheet according to the 39th embodiment;

Fig. 84 is a perspective view showing part of metal sheets of an electrically heating catalytic converter according to a 40th embodiment of the present invention;

Figs. 85(a), 85(b) and 85(c) are views showing a bridge formed on the metal sheet of the 40th embodiment, seen in three different directions;

Fig. 86 is a plan view showing an electrically heating catalytic converter according to the 40th embodiment;

Fig. 87 is an enlarged view showing the bridges of the 40th embodiment;

Fig. 88(a) is a view showing an example with no bridges;

Fig. 88(b) is a view showing the 40th embodiment with the bridges;

Fig. 89(a) is a plan view showing a pair of metal sheets of an electrically heating catalytic converter according to a 41st embodiment of the present invention;

Fig. 89(b) is a plan view showing another pair of metal sheets according to the 41st embodiment;

Fig. 89(c) is a view showing a process of winding the metal sheet pairs around a center electrode according to the 41st embodiment;

Fig. 90 is a perspective view showing the process of winding the metal sheet pairs around the center electrode according to the 41st embodiment;

Fig. 91 is a perspective view showing a joint of the metal sheet pairs according to the 41st embodiment;

Fig. 92 is a longitudinal section showing a completed catalyst carrier according to the 41st embodiment;

Fig. 93 is a perspective view showing a catalyst carrier according to a 42nd embodiment of the present invention;

Fig. 94 is an enlarged view showing brazed parts in an area B of Fig. 93;

Fig. 95 is a front view showing a catalyst converter according to a 43rd embodiment of the present invention;

Fig. 96 is an enlarged view showing part of an end face of the 43rd embodiment;

Fig. 97 is a view showing an arrangement of hot spots of the 43rd embodiment;

Fig. 98(a) is a view showing an arrangement of hot spots with metal sheets of a catalyst carrier being equidistantly joined; and

Fig. 98(b) is a view showing an arrangement of hot spots with metal sheets of a catalyst carrier being joined at variable distances.

DETAILED DESCRIPTION OF THE EMBODIMENTS

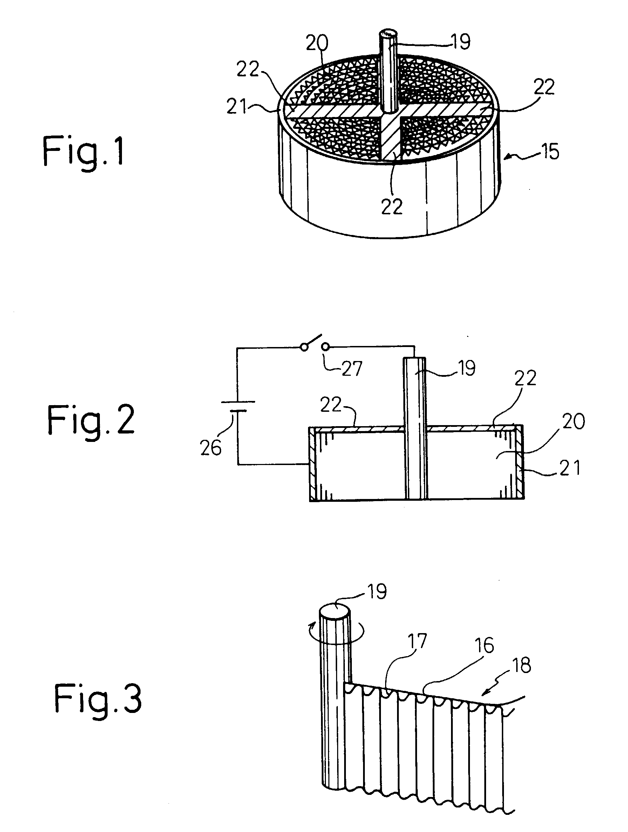

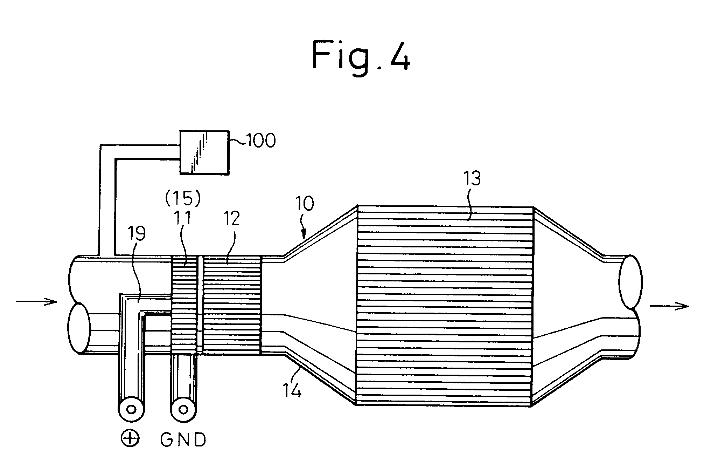

Figures 1 to 6 show the structure, manufacturing processes, and effects of an electrically heating catalytic apparatus 10 according to a first embodiment of the present invention. In Fig. 4, the catalytic apparatus 10 involves three catalytic converters connected in series along a flow of exhaust from an internal combustion engine. The flow of exhaust is indicated with arrow marks in the figure. The first catalytic converter 11 arranged on the upstream side in the exhaust flow has a smallest catalyst carrier of, for example, 100 cc in volume. Just behind the first catalytic converter 11, the second catalytic converter 12 larger than the converter 11 is arranged. Behind the second catalytic converter 12, the largest third catalytic converter 13 is arranged. These three catalytic converters 11, 12, and 13 are sequentially arranged in a continuous path 14. An air supply unit 100 such as an air pump is arranged on the upstream side of the catalytic apparatus 10, to supply air to the catalytic apparatus 10.

The first converter 11 is characteristic to the first embodiment of the present invention and will be explained later in detail. The second converter 12 may be double the size of the first converter 11. Compared with the first and second converters 11 and 12, the third converter 13 is quite large. Although the second and third catalytic converters 12 and 13 have different volumes, they are of conventional type employing a usual catalyst carrier such as a ceramic or metallic honeycomb carrier, or a pellet-like carrier with no electric heater.

The first catalytic converter 11 according to the first embodiment of the present invention is very small and employs a metallic honeycomb carrier 15 to be electrically heated.

Figure 1 shows a complete form of the carrier 15 of the first catalytic converter of the catalytic apparatus 10. The carrier 15 is made from heat resistant electrically conductive thin metal sheets 16 and 17 such as stainless steel sheets. The sheet 16 is flat and the sheet 17 is corrugated. In Fig. 3, the sheets 16 and 17 are laid one upon another. Contact points between the sheets 16 and 17 are joined with each other by spot welding, etc., into a corrugated band 18.

The band 18 is coated with an insulation layer made of, for example, an oxide film. An end of the band 18 is physically and electrically connected to a center electrode 19. The band 18 is wound around the electrode 19 in a spiral shape and is tightened into a honeycomb cylinder 20. The honeycomb cylinder 20 is placed in an outer casing 21 and is fixed thereto. The casing 21 serves as a grounding electrode. An outer end of the band 18 is electrically connected to the casing 21. The electrode 19 and casing 21 are connected to a power source. When a current is supplied to the band 18, the metal sheets 16 and 17 of the band 18 generate heat to heat catalyst such as precious metal carriered by a coat layer made from, for example, activated alumina.

The structure and manufacturing processes of the catalyst carrier 15 of the first catalytic converter 11 are known ones. The first catalytic converter 11 according to the first embodiment of the present invention is characterized in that an upstream end face of the honeycomb cylinder 20 is provided with short-circuit cross paths 22 by laser welding or brazing. The paths 22 are narrow and radially extend to directly connect the center electrode 19 to the outer casing 21.

The catalyst carrier 15 with the short-circuit paths 22 forms the first catalytic converter 11 of the catalytic apparatus 10 of Fig. 4. The carrier 15 is connected to a power source 26 such as a battery, as shown in Fig. 2. A switch 27 is arranged in a circuit for supplying power to the carrier 15. The switch 27 is closed and opened by a controller (not shown) for the engine.

As soon as the engine is started, the switch 27 is closed to supply power from the power source 26 to the carrier 15. Unlike a prior art that uniformly supplies a current to the corrugated band 18 of the honeycomb cylinder 20, the first embodiment of the present invention collectively supplies a large current to the short-circuit paths 22. This is because the radial short-circuit paths 22 form an electric circuit having lower resistance than the band 18, in parallel with the band 18 of the honeycomb cylinder 20. At this time, the band 18, except the areas around the paths 22, receives a smaller current.

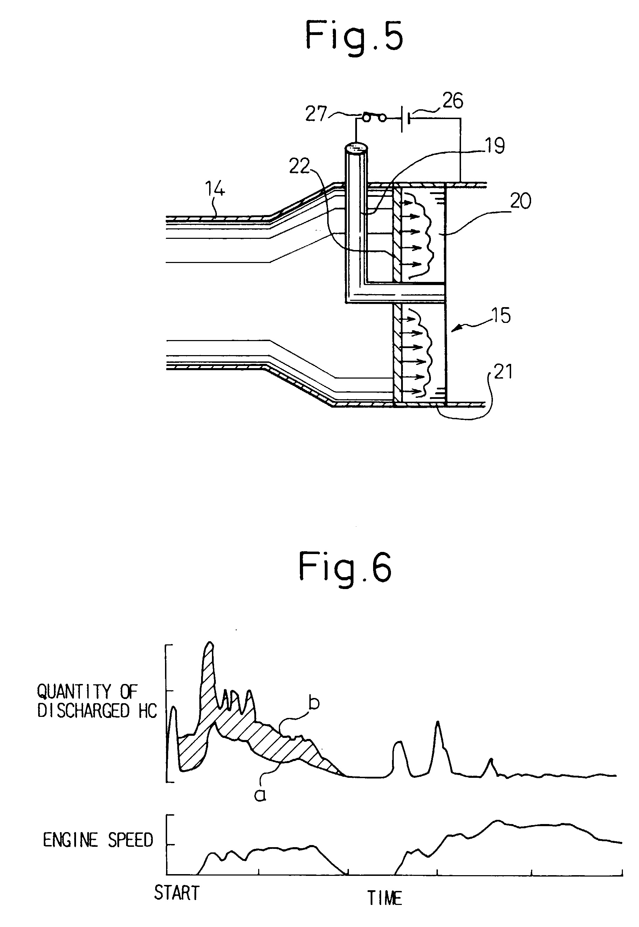

When the large current collectively flows through the radial short-circuit cross paths 22, the paths 22 generate heat to rapidly heat limited areas around the paths 22. As a result, the catalyst in the areas reaches an activation temperature as soon as the engine is started, to oxidize components such as HC and CO contained in an exhaust gas from the engine, as shown in Fig. 5. In Fig. 5, arrow marks indicate the progress of oxidization around the short-circuit paths 22. Although the area of the short-circuit paths 22 is narrow, it generates hot spots therearound, to maintain catalytic reactions at the spots.

For a limited time period after the start, the engine emits a large quantity of incompletely burnt pollutants such as HC. The quantity of HC during a first idling operation is about 0.2 g according to our measurements. HC is contained in gasoline as $C_6H_{14}$ and $C_8H_{18}$, which provide a heating value of about 10000 cal/g. If HC of 0.2 g is oxidized (burnt) in the first catalytic converter 11, it will provide a heating value of about 2000 cal.

During the first idling operation, the air-fuel ratio of an intake air-fuel mixture is rich, and therefore, the exhaust contains a large quantity of incompletely burnt HC. If the catalyst is activated under this state and if a sufficient quantity of oxygen is supplied with secondary air to the exhaust, the incompletely burnt HC is burnt (oxidized) to produce heat. This heat and the heat of the exhaust itself heat the first catalytic converter 11 and the second catalytic converter 12 that follows the first converter 11, to thereby successively increase the temperatures of the converters 11 and 12.

In practice, the heat generated by the combustion of the incompletely burnt components may not be entirely absorbed by the catalyst carrier 15 of the first converter 11. It is possible, however, that the first and second converters 11 and 12 are rapidly heated with heat produced by currents passing through the short-circuit paths 22 and band 18 of the carrier 15, with heat produced by fuel combustion in the engine and carried with exhaust, and with heat produced by incompletely burnt components in the exhaust oxidized by heat spots around the short-circuit paths 22, to a catalyst activation temperature.

The present invention utilizes the incompletely burnt components in exhaust as fuel for speedily warming up and activate the catalytic converters to sufficiently remove pollutants such as HC produced in a relatively large quantity. The heat of reaction produced by the converters 11 and 12 is useful for warming up the third catalytic converter 13 of large volume.

Even if the area of the short-circuit paths 22 of the carrier 15 is narrow, the paths 22 cause hot spots as soon as the engine is started, to start catalytic reactions around the hot spots. The heat of the reactions successively heats and activates the catalyst located at the remaining spots. Accordingly, even with a small electric power of, for example, 1 Kw or below that is smaller than that consumed by the prior art, the catalytic apparatus 10 as a whole is warmed up in a short time and quickly starts an exhaust purifying reaction. This results in shortening a time period in which the exhaust is not purified, to thereby reduce the quantity of pollutants to be discharged.

Figure 6 shows temporal relationships between engine speeds and the quantities of HC discharged from the catalytic apparatus 10, to explain the effect of the first embodiment. Curves shown in the figure have been obtained according to a so-called LA#4 mode of engine operation. In the figure, the curve "a" is of the first embodiment of the present invention and indicates that the quantity of discharged HC quickly decreases after the start of the engine. The curve "b" if of a conventional electrically heating catalytic apparatus and indicates that catalyst is warmed up behind the present invention and that the prior art is incapable of decreasing the quantity of discharged HC just after the start of engine. The difference in the quantity of the discharged HC between the present invention and the prior art corresponds to a hatched area in Fig. 6. Electric power consumed by catalyst carriers of the prior art is larger than that of the first embodiment of the present invention. The quantities of the discharged HC of the first embodiment and prior art become equal to each other after a while.

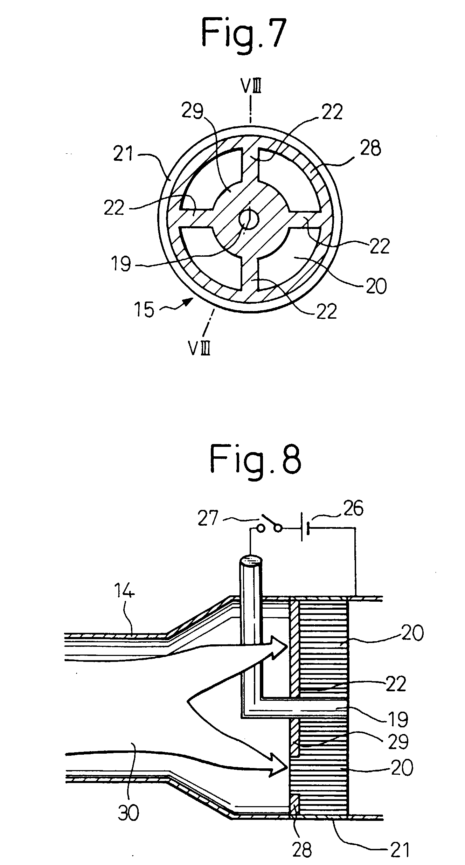

Figures 7 and 8 show a catalytic converter according to a second embodiment of the present invention. In each of the following embodiments, the same parts as those of the first embodiment are represented with like reference marks, and their explanations will not be repeated. The second embodiment aims to further reduce power consumption for heating a catalyst carrier 15. To achieve this, the length of each of radial short-circuit paths 22 of the second embodiment is shorter than that of the first embodiment, to reduce an area heated by the short-circuit paths 22. The paths 22 of the second embodiment are formed on an upstream end face of a honeycomb cylinder 20 made of a lamination of flat and corrugated metal sheets, similar to the first embodiment. Annular short-circuit plates 28 and 29 are laser-welded or brazed along an outer casing 21 and around a center electrode 19 on the upstream end face.

Sections of the honeycomb cylinder 20 behind the annular plates 28 and 29 have lower electric resistance than the short-circuit paths 22, so that the sections behind the plates 28 and 29 generate substantially no heat. This results in reducing power consumption. Even if no heat is generated along the outer casing 21 and around the center electrode 19 on the upstream end face, the same effect as the first embodiment is achievable.

The reason of this will be explained. In Fig. 8, an exhaust flow 30 in the honeycomb cylinder 20 of the catalyst carrier 15 is not uniformly distributed over the cross-sectional area of the honeycomb cylinder 20. Substantially no exhaust flows around the center electrode 19 and along the outer casing 21, and the fastest exhaust flow occurs in an annular area between the center electrode 19 and the outer casing 21. Namely, even if the sections around the center electrode 19 and along the outer casing 21 are heated, the heat will not be effective to heat the downstream parts of the carrier 15, etc. Accordingly, the second embodiment collectively heats the area where the speed of the exhaust flow 30 is fastest and suppresses heat at the other areas. Namely, the second embodiment arranges the radial short-circuit pats 22 only at the areas where heat is effectively used. Each of the first and second embodiments employs four radial short-circuit paths 22. The number of the paths 22, however, is optional and does not limit the present invention.

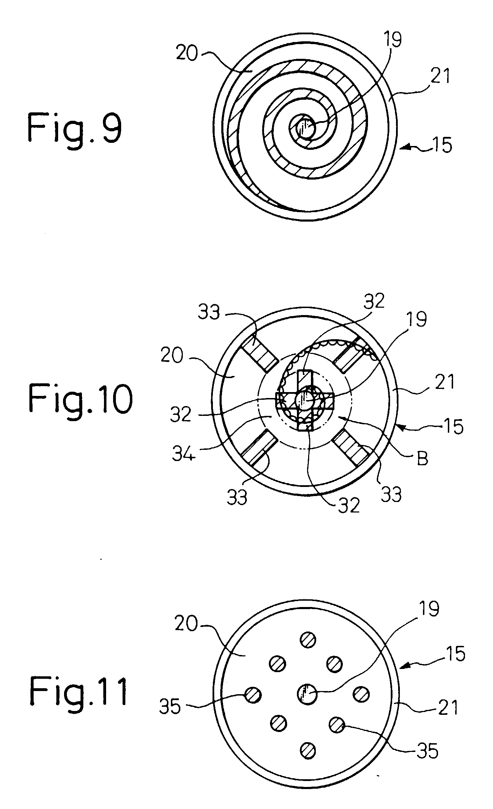

Figure 9 shows a catalytic converter according to a third embodiment of the present invention. Instead of the radial short-circuit paths 22 of the first and second embodiments, the third embodiment arranges a spiral short-circuit metal path 31 on an upstream end face of a honeycomb cylinder 20 of a catalyst carrier 15. The spiral path 31 may be prepared in the same manner as the radial short-circuit paths 22 only with changing the control pattern of electrodes of a laser welder. The spiral short-circuit path 31 uniformly distributes hot spots on the upstream end face of the honeycomb cylinder 20, to quickly activate the catalytic apparatus 10. Instead of the single spiral path, it is possible to prepare multiple spiral short-circuit paths.

Figure 10 shows a catalytic converter according to a fourth embodiment of the present invention. This embodiment cuts the middle of each of the radial short-circuit paths 22 of the first or second embodiment and turns the cut paths, to form radial short-circuit paths 32 and 33 that are not directly connected to each other. Namely, a clearance 34 is formed between them. At the clearance 34, a current flows through a part of a corrugated band 18 of a honeycomb cylinder 20. Since the electric resistance of the clearance 34 is large, the clearance 34 limits currents flowing through the paths 32 and 33. In this embodiment, main current paths are the paths 32 and 33 and an area B (Fig. 10) of the corrugated band 18. These paths and area generate heat. The size of the clearance 34 may be properly selected to adjust currents such that no excessive load is applied to contacts between the paths 32 and 33 and the honeycomb cylinder 20, to prevent malfunctions.

Figure 11 shows a catalytic converter according to a fifth embodiment of the present invention. This embodiment is characterized in that many island-like short-circuit paths 35 each having a proper area are distributed at random on an upstream end face of a honeycomb cylinder 20 made of a lamination of flat and corrugated metal sheets. This arrangement efficiently heats a catalyst carrier 15. Even if some of the paths 35 peel off a corrugated band 18 of the honeycomb cylinder 20, the remaining ones cause hot spots. Namely, even if the carrier 15 is partly damaged, this embodiment secures hot spots.

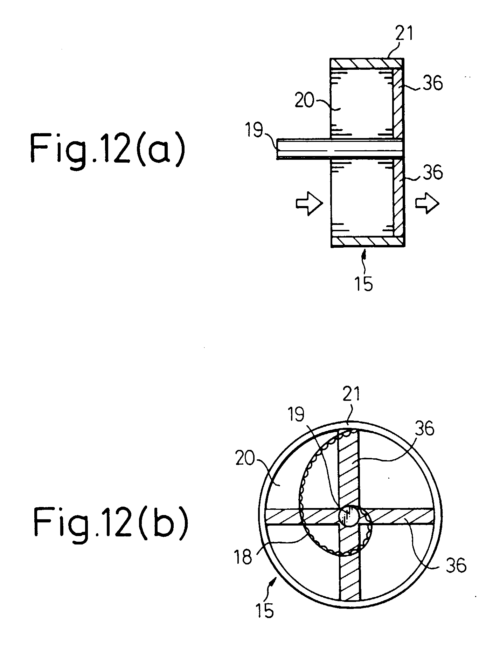

Figures 12(a) and 12(b) show a catalytic converter according to a sixth embodiment of the present invention. This embodiment employs radial short-circuit paths 36 similar to the radial short-circuit paths 22. The paths 36 are arranged on a downstream end face of a honeycomb cylinder 20 made of a lamination of flat and corrugated metal sheets of a catalyst carrier 15. When a current is supplied to the radial paths 36, it generates heat. This heat, however, does not heat the carrier 15 itself with the help of an exhaust flow that flows in the direction of arrow marks. Instead, the heat is transferred to the upstream side of the carrier 15 only by the heat conduction of the carrier 15 itself. Compared with the paths (hot spots) 22, 31, 32, 33, and 35 arranged on the upstream end face of the honeycomb cylinder 20 of the first to fifth embodiments, the paths 36 of the sixth embodiment provide poorer heating effects. If exhaust contains led, phosphorus, etc., catalyst on the upstream side is firstly damaged by these components, to deteriorate catalytic performance. Accordingly, the paths 36 are arranged on the downstream end face that is less affected by such led and phosphorous, so that, even if the catalyst on the upstream side is deteriorated, the sixth embodiment is able to maintain successive catalytic actions.

The same idea as the sixth embodiment is applicable to the second to fifth embodiments, to arrange their short-circuit paths on the downstream end faces.

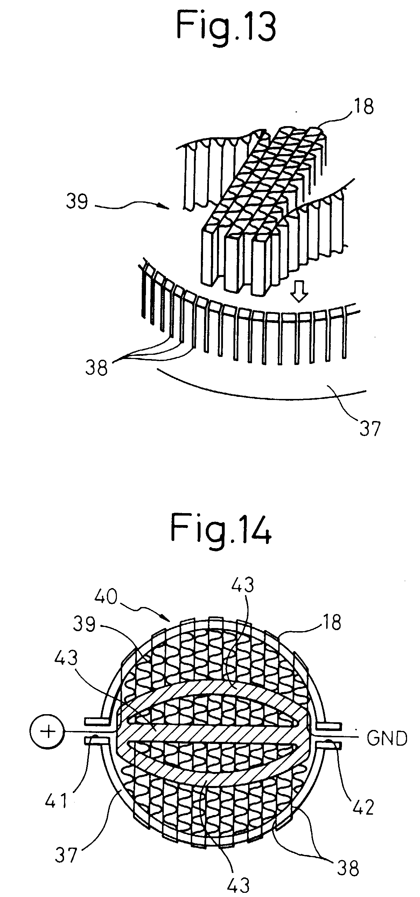

Figures 13 and 14 show a catalytic converter according to a seventh embodiment of the present invention. In the first to sixth embodiments, the catalyst carrier 15 is made by winding the corrugated band 18 made of flat and corrugated metal sheets around the center electrode 19 into the honeycomb cylinder 20. The seventh embodiment forms comb slits 38 around a cylindrical slit holder 37. A corrugated band 18 (Fig. 3) made of flat and corrugated metal sheets is folded and laminated into a lamination body 39, which is placed in the holder 37. Folded parts of the band 18 are inserted into and fixed to the slits 38, to form a catalyst carrier 40.

The carrier 40 has no center electrode 19. Accordingly, ends of the band 18 are connected to leads that pass through holes 41 and 42 of the holder 37. The leads are connected to an external power source such as a battery, or to a switch. The leads are fixed to the holes 41 and 42 with heat resistant adhesive, which seals the holes 41 and 42. The carrier 40 is arranged in an outer casing.

An upstream end face of the body 39 of the carrier 40 according to the seventh embodiment is provided with three discharge-welded short-circuit paths 43 as shown in Fig. 14. Similar to the previous embodiments, the paths 43 provide hot spots after the start of the engine. The numbers and shapes of the paths 43 may be optionally selected. Similar to the sixth embodiment, the paths 43 may be arranged on a downstream end face of the body 39.

In the above embodiments, the corrugated band 18 is partly short-circuited by discharge welding, etc., on the upstream or downstream end face of the catalyst carrier 15 or 40, to form the short-circuit paths that provide hot spots. In the following embodiments, an electric heater that is discrete of a catalyst carrier is arranged on an end face of the catalyst carrier, to provide hot spots when the heater is energized.

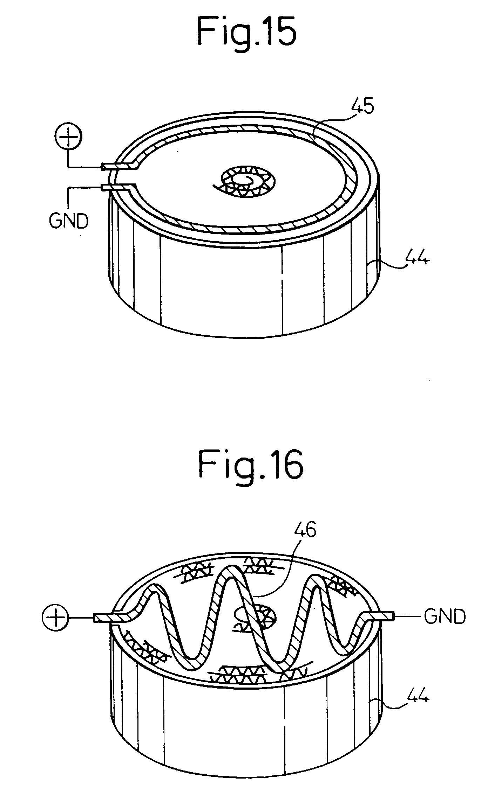

Figure 15 shows a catalytic converter according to an eighth embodiment of the present invention. This embodiment employs a metallic honeycomb catalyst carrier 44 similar to the carrier 15. An upstream or down stream end face of the carrier 44 is provided with a circular electrically conductive heater 45 made of, for example, SiC. When energized, the heater 45 provides hot spots to burn combustible components such as HC and CO contained in exhaust, to thereby increase the temperature of the carrier 44. The circular shape of the heater 45 corresponds to an annular cross-sectional area of the carrier 44 where the flow rate of the exhaust is largest.

The heater 45 of the eighth embodiment may have any other shape. Figure 16 shows a modification of the eighth embodiment, employing a winding heater 46. The heater 46 uniformly heats the end face of the carrier 44, to promote reactions over the carrier 44 among incompletely burnt components contained in exhaust.

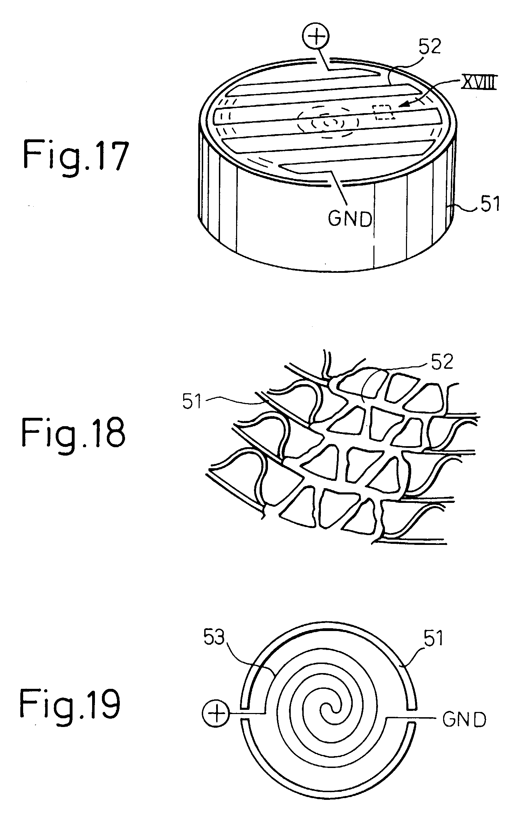

Figures 17 to 19 show a catalytic converter according to a ninth embodiment of the present invention. An oxygen sensor disposed in an exhaust system of an internal combustion engine has a printed heater made from platinum to heat the sensor at low temperatures, to thereby secure correct operation of the sensor. The ninth embodiment employs this technique. In Fig. 17, an end face of a honeycomb catalyst carrier 51 made of ceramics or metal having a surface insulation film is provided with a platinum printed heater 52. Figure 18 is an enlarged view showing a part XVIII of Fig. 17. Most of holes of the carrier 51 are left without being covered with the printed heater 52. Since the platinum of the heater 52 provides catalytic reactions, the exhaust purifying efficiency of the catalytic apparatus is promoted thereby.

The printed heater 52 may have any pattern. Figure 19 shows a modification of the ninth embodiment, having a printed heater 53 of double spiral shape.

The heater 52 is arranged not only on the upstream end face of the carrier 44 or 51 but also on the downstream end face thereof, to avoid damages on the heater due to heat shocks or lead and phosphorous contained in exhaust.

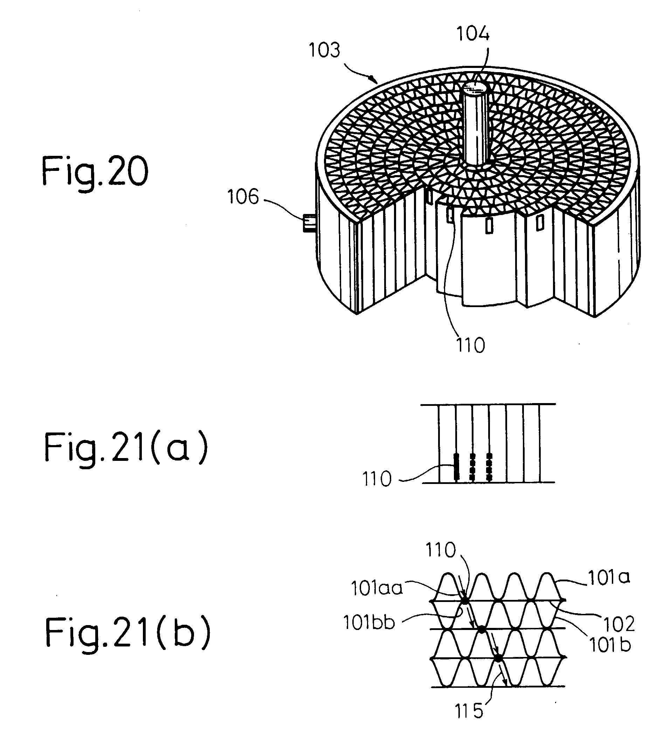

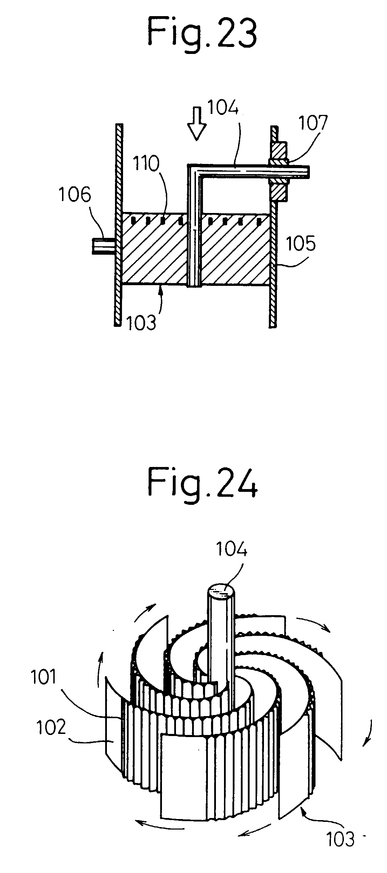

Figure 20 to 24 show a catalytic converter according to a 10th embodiment of the present invention. In Fig. 24, corrugated and flat thin metal sheets 101 and 102 are alternately laminated and wound around a positive electrode 104 into a spiral shape, to form a honeycomb catalyst carrier 103. Each of the metal sheets 101 and 102 is made of, for example, 20% Cr, 5% Al, and 75% Fe and has a thickness of about 50 micrometers. Noncontact areas on the surface of each of the sheets 101 and 102 are provided with an alumina insulation layer by oxidization.

In Figs. 20 and 23, the positive electrode 104 is axially arranged at the center of the carrier 103. The electrode 104 is physically and electrically connected to the carrier 103. The carrier 103 is inserted into a cylindrical metal casing 105 and fixed thereto by, for example, brazing. The carrier 103 is electrically conductive to the casing 105. In Fig. 20, a negative electrode 106 is connected to a side face of the casing 105. In Fig. 23, the positive electrode 104 extends along the axis of the casing 105 and is bent in an L shape to pass through the side face of the casing 105. The electrode 104 is electrically isolated from the casing 105 with an insulation material 107.

In Figs. 20 to 22, each zone 110 extends for about 3 mm behind an upstream end face of the carrier 103. In the zone 110, a valley 101aa of a corrugated sheet 101a is joined with a crest 101bb of a corrugated sheet 101b that is adjacent to a flat sheet 102 by brazing, discharge welding, laser welding, etc. The zone 110 forms a short-circuit path for passing a current 115 from the center electrode 104 to the casing 105.

The carrier 103 is coated with activated alumina, etc., and carriers catalyst such as precious metal such as Pt, Pd, and Ph, to form an electrically heating catalytic converter.

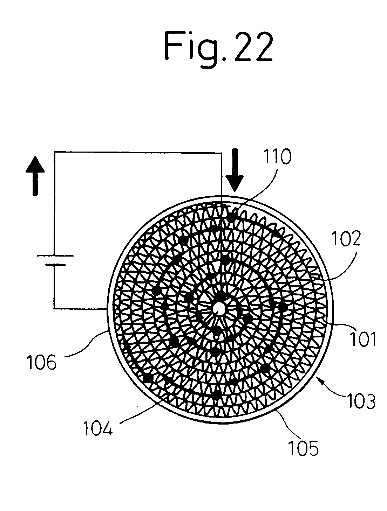

The catalytic converter shown in Figs. 20 to 24 is arranged in an exhaust path of an internal combustion engine, and behind this converter, a main catalytic converter is disposed. The catalyst provides an exhaust purifying reaction only when it is heated above an activation temperature. Accordingly, while the engine is cold, the electrically heating catalytic converter is energized to quickly increase the catalyst on the carrier 103 above the activation temperature, to purify noxious components contained in exhaust. In Fig. 22, there are about 20 heat generating zones each extending for several millimeters in the direction of an exhaust flow, to rapidly heat the catalyst, together with effectively using energy generated when unpurified gas components such as HC are oxidized. This results in greatly reducing power consumption.

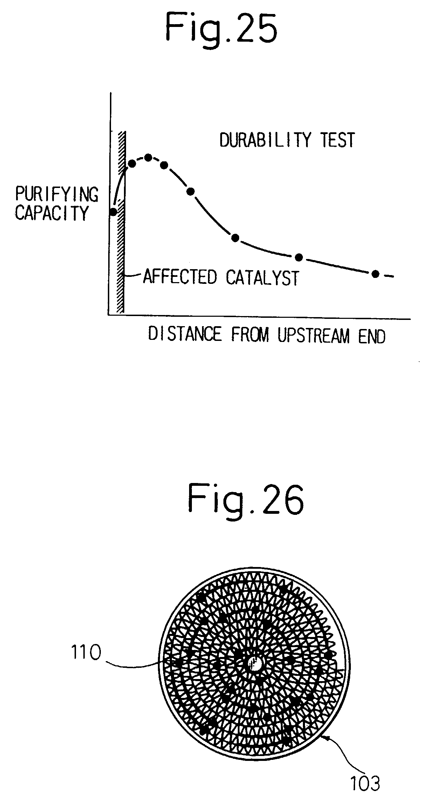

As shown in Fig. 25, the inventors have found through experiments that catalyst located at hot spots is damaged at high temperatures by Pb, P, and S contained in exhaust, if the hot spots are positioned on an upstream side in the flow of the exhaust. This results in deteriorating catalytic performance. In addition, the hot spots themselves will be short-circuited and damaged due to metal components discharged from a combustion chamber. If the hot spots are spaced apart from the upstream end face by about 1 mm, the above problems will be avoided and catalytic reaction will be secured.

In Fig. 22, when a voltage is applied, a current spirally flows from the positive electrode 104 through the joined corrugated and flat sheets 101 and 102 and is collected at each zone 110 whose area is smaller than those of the sheets 101 and 102, to form hot spots. The current is short-circuited from the zone 110 to the adjacent sheets 101 and 102. This is repeated, and the current flows to the negative electrode 106.

When a voltage is applied, each zone 110 is heated to the catalyst activation temperature, to start purifying noxious substances contained in exhaust. This catalytic reaction generates heat to increase the temperature of the carrier 103 around the zones 110. Accordingly, the main catalytic converter is also heated by the heat of the catalytic reaction.

In this way, this embodiment energizes the zones 110 while the engine is cold, to quickly increase the temperature of the carrier 103 to the catalytic activation temperature, to thereby promptly purify exhaust. This embodiment greatly reduces power consumption and prevents the catalyst from being damaged by noxious compositions contained in the exhaust. Even if the carrier 103 is subjected to the exhaust of high temperature, the carrier 103 will not be axially deformed because of the joined zones 110. Namely, this embodiment improves the strength of the carrier 103.

Figures 26 to 39 show 11th to 19th embodiments of the present invention.

The 11th embodiment of Fig. 26 employs heating zones 110 formed in a limited central area, to further reduce power consumption. The zones 110 are required to be energized only just after the start of an engine when the quantity of exhaust is small. At this time, the exhaust flows through an annular intermediate section of a catalyst carrier 103. Accordingly, the exhaust is sufficiently purified even if only the annular section is heated.

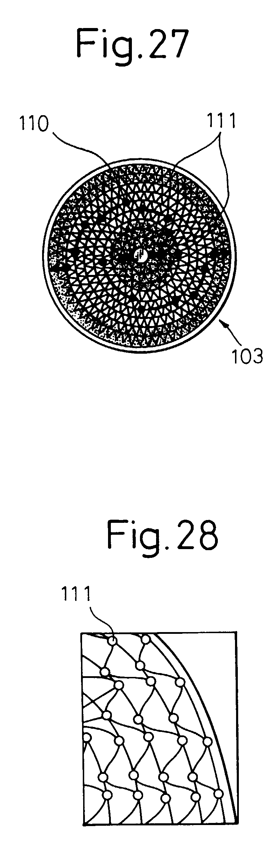

The 12th embodiment of Figs. 27 and 28 is a modification of the 11th embodiment of Fig. 26. The 12th embodiment brazes all contacts between flat and corrugated sheets of a catalyst carrier 103 except in an annular heating area 110, to reduce resistance. Non-heating portions 111 thus formed generate no heat to further reduce power consumption.

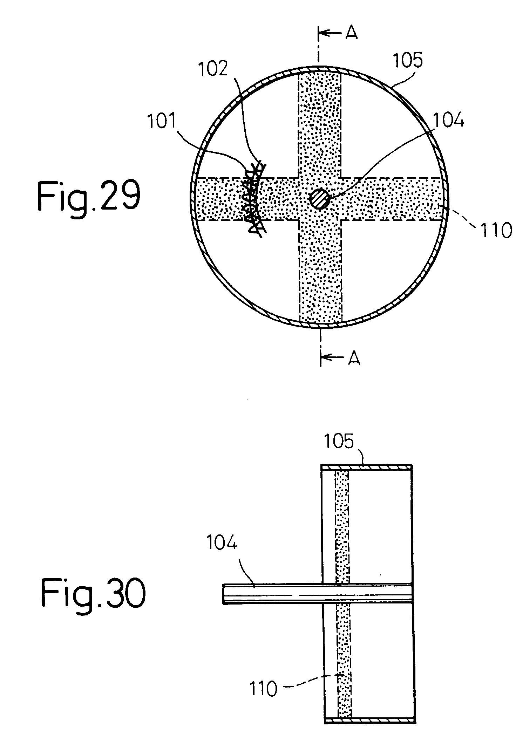

The 13th embodiment of Figs. 29 and 30 forms cross heat generating zones 110 around a center electrode 104. In the heat generating zones 110, contacts between corrugated and flat sheets 101 and 102 are joined with one another by brazing or welding. When the welding is employed, the sheets 101 and 102 are wound while being welded by laser welding or by spot welding. When the brazing is employed, binder is applied to the sheets 101 and 102 in the heat generating zones 110, and the sheets are wound. It is preferable to apply the binder to contacts between the sheets 101 and 102, or to shoulders of the corrugated sheet 101 in contact with the flat sheet 102. After the sheets are completely wound, brazing material is applied thereto, and the sheets are heat-treated. Before the brazing, insulation films on the surfaces of the sheets 101 and 102 are removed at the parts to be brazed, to improve the strength of the brazed parts.

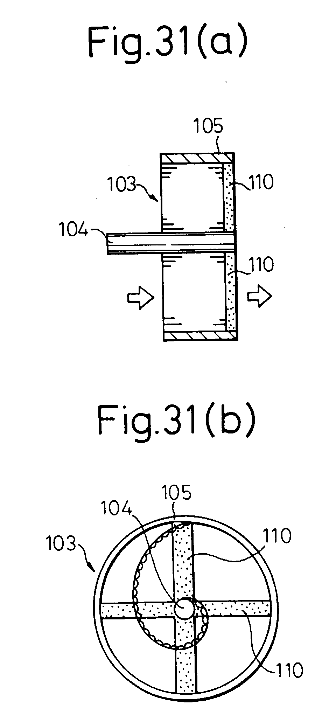

The 14th embodiment of Figs. 31(a) and 31(b) arranges short-circuit paths 110 similar to those of the 13th embodiment on a downstream end face of a honeycomb metallic catalyst carrier 103 made of a lamination of corrugated and flat sheets. The paths 110 are energized to generate heat, which does not heat the carrier 103 with the help of a flow of exhaust in the direction of arrow marks. The upstream side of the carrier 103 is heated only by heat conduction through the carrier 103 itself. Accordingly, the heating efficiency of the 14th embodiment is poorer than the embodiments that form the short-circuit paths on the upstream end face of the carrier 103. If the exhaust contains led and phosphorous, catalyst on the upstream side is affected by them to loose catalytic capability. When the short-circuit paths 110 are arranged on the downstream end face where the noxious components hardly affect the paths 110, successive catalytic reactions will be secured even if the upstream side of the carrier 103 is affected by the noxious components.

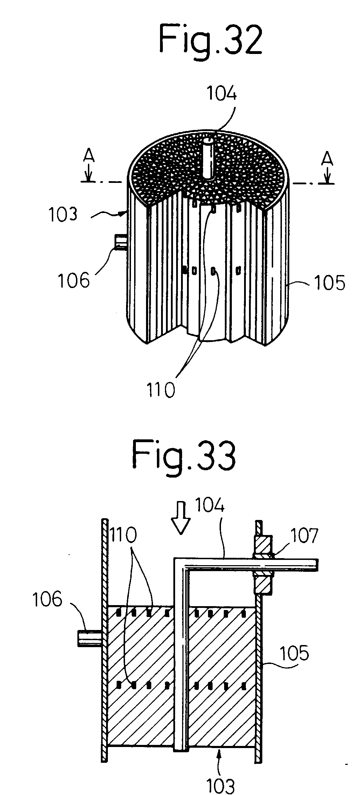

The 15th embodiment of Figs. 32 and 33 employs a large catalyst carrier 103. Heating zones 110 are formed at several axial locations along the flow of exhaust, to rapidly activate the carrier 103 as a whole.

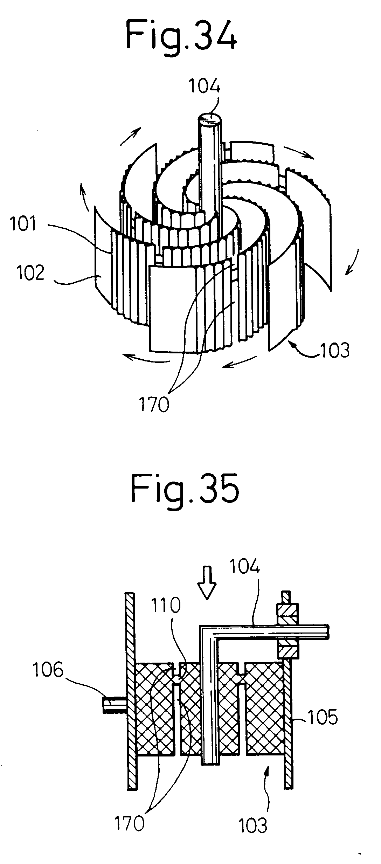

The 16th embodiment of Figs. 34 and 35 forms axial slits 170 at several locations of a honeycomb carrier 103 so that each continuous part 110 generates heat.

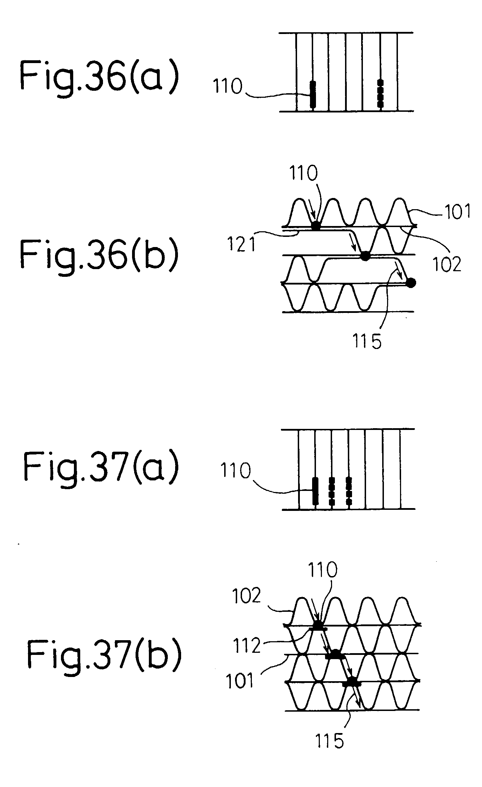

Figures 36 and 37 show the 17th and 18th embodiments, respectively. To easily fabricate each heating zone 110, the embodiment of Fig. 36 forms a flat part 121 on a corrugated sheet 101 in the zone 110 and welds the part with laser. In Fig. 37, a flat sheet 112 is added to the zone 110, and the zone is welded with laser, to simply fabricate the zone 110. In these figures, numeral 115 indicates a current.

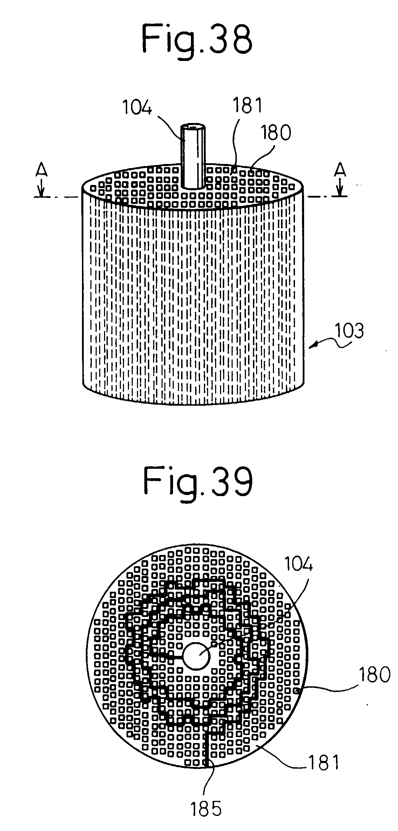

Figures 38 and 39 show the 19th embodiment. A ceramic carrier 103 has openings 180 extending from the upstream side to the downstream side of the carrier 103 in the direction of a flow of exhaust. A metal wire 185 made of, for example, tungsten is arranged on ceramic parts other than the openings 180 on an end face of the carrier 103, to form a heat generating zone. Similar to the 11th embodiment of Fig. 26 and the 12th embodiment of Fig. 27, the 19th embodiment limits the heat generating zone to a center area on the end face, to reduce power consumption. Although this embodiment employs the ceramic honeycomb catalyst structure, granular catalyst, i.e., pellet catalyst may be employable to provide the same effect.

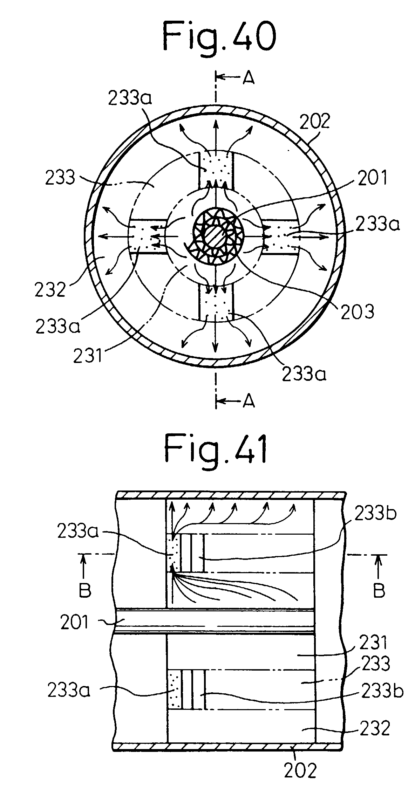

Figure 40 is a front view showing a catalyst carrier of a electrically heating catalytic converter according to a 20th embodiment of the present invention. Figure 41 is a sectional view taken along a line A-A of Fig. 40. The left side of the figure is an upstream side in a flow of exhaust. Numeral 201 is a center electrode and 202 is an outer casing serving as the other electrode. Numeral 203 is a corrugated metal band made of corrugated and flat sheets to carrier catalyst. At one corrugated band 203 is arranged in a spiral shape from the center electrode 201 to the outer casing 202. The band 203 is electrically insulated with an alumina film. Large part of a first annular area 231 around the center electrode 201 is radially short-circuited by discharge welding, etc. Similarly, large part of a second annular area 232 adjacent to the outer casing 202 is radially short-circuited by discharge welding, etc. On the other hand, a third annular area 233 between the annular areas 231 and 232 is radially short-circuited only at four rectangular specific parts 233a on the upstream side as indicated with dots in Figs. 40 and 41. The remaining parts of the third annular area 233 are radially insulated with insulation films.

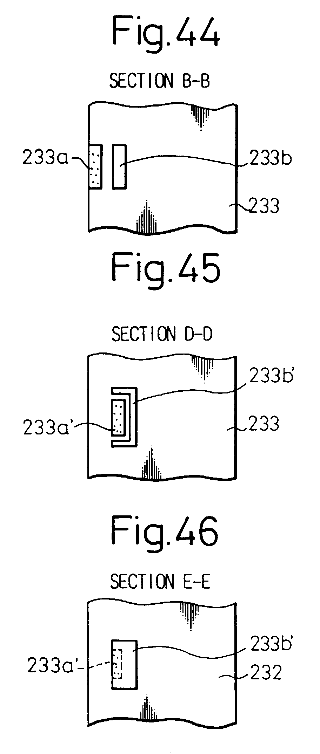

Inner spaces 233b are formed behind the specific parts 233a. Figure 44 is a sectional view taken along a line B-B of Fig. 41. Each inner space 233b has substantially the same projected area as the corresponding specific part 233a in a front view. The inner spaces 233b are formed in the corrugated band 203 before winding.

When a voltage is applied to the center electrode 201 and the other electrode 202 at the start of an engine that is cool, a current radially flows through the specific parts 233a as indicated with arrow marks in Figs. 40 and 41 because the other parts in the third annular area 233 are radially insulated. Since the electric resistance of the specific parts 233a is larger than that of the first and second annular areas 231 and 232, only the specific parts 233a generate heat to reach a catalyst activation temperature to purify exhaust. The heat of chemical reaction thus caused heats the remaining parts of the carrier. As a result, the carrier as a whole reaches the activation temperature within a relatively short time, to sufficiently purify the exhaust.

This embodiment heats only the specific parts 233a of the carrier, so that its power consumption is smaller than that of the catalytic converter that heats the whole of the carrier. This helps reduce the size of a power source battery. Only the specific parts 233a thermally expand at this time. The extension of the parts in an axial direction is absorbed by the inner spaces 233b, so that no axial stress is applied to the other parts. Inner stress in the carrier may cause cracks on the corrugated band 203 within a short period. Such cracks will cause fatal electric trouble in the converter. This embodiment prevents such trouble and extends the mechanical service life of the carrier.

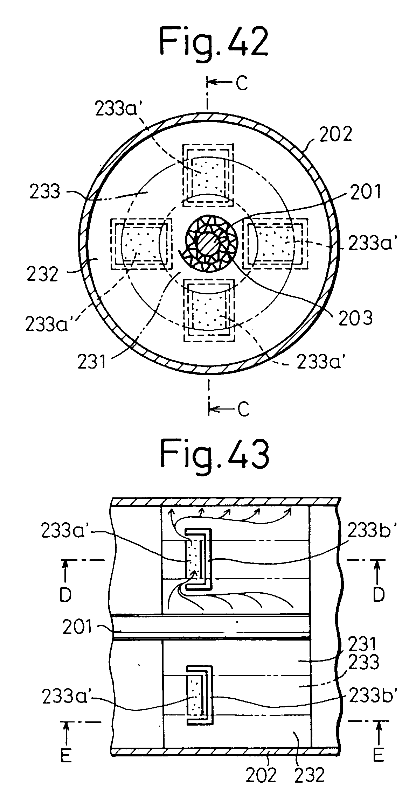

Figure 42 is a front view showing an electrically heating catalytic converter according to a 21st embodiment of the present invention. Figure 43 is a sectional view taken along a line C-C of Fig. 42. Similar to Fig. 41, the left side of Fig. 43 is an exhaust upstream side. Only the difference of this embodiment from the 20th embodiment will be explained. Each specific part 233a' for generating heat is arranged inside a catalyst carrier away from an upstream end face of the carrier. Since the upstream end face of the carrier is easily damaged by adhesion of noxious substances contained in exhaust, the specific parts 233a' of this embodiment are disposed behind the upstream end face. Although the exhaust purifying capability of this embodiment is lower than that of the 20th embodiment, the 21st embodiment is advantageous in extending the service life of the carrier.

An inner space 233b' is formed in the vicinity of each specific part 233a'. As shown in Fig. 43 and Fig. 45 that is a sectional view taken along a line D-D of Fig. 43, the inner space 233b' is formed not only behind the specific part 233a' but also in the vicinities of the four side faces thereof.

Similar to the previous embodiment, only the specific parts 233a' generate heat to purify exhaust after the start of an engine that is cool. Accordingly, this embodiment consumes low power. Since the inner spaces 233b' absorb not only the axial elongation of the specific parts 233a' but also the radial and circumferential expansions thereof, no stress is applied in any direction to the other parts. The 21st embodiment, therefore, further improves the mechanical service life of the carrier.

According to the 20th and 21st embodiments, the first and second annular areas 231 and 232 are radially strongly connected to each other through the specific parts. Accordingly, even if the inner spaces are provided, the carrier will not be deformed toward the downstream side due to a flow of exhaust.

The shape and position of each inner space are not limited to those of the above two embodiments. For example, the space may be formed adjacent to one side face of the heat generating specific part. Even such space may absorb the thermal expansion of the specific part in the direction. This results in relaxing stress on the carrier, to extend the mechanical service life of the carrier.

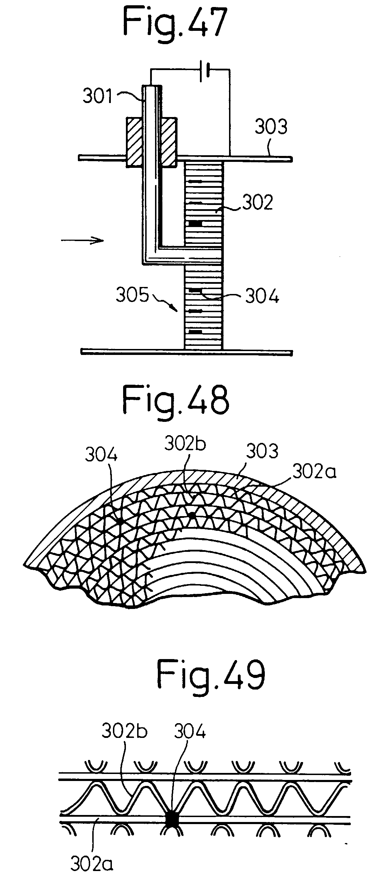

Figure 47 is a sectional view showing an electrically heating catalytic converter according to a 22nd embodiment of the present invention. A corrugated band 302 made of flat and corrugated metal sheets 302a and 302b are wound around a center electrode 301, to form a catalyst carrier, which is inserted in an outer casing 303.

In Fig. 48, the flat and corrugated sheets 302a and 302b are laminated one upon another and wound such that a valley of a given layer of the corrugated sheet, a layer of the flat sheet, and a crest of an adjacent inner layer of the corrugated sheet form a joint 304.

In Fig. 49, the flat sheet 302a is thicker than the corrugated sheet 302b.

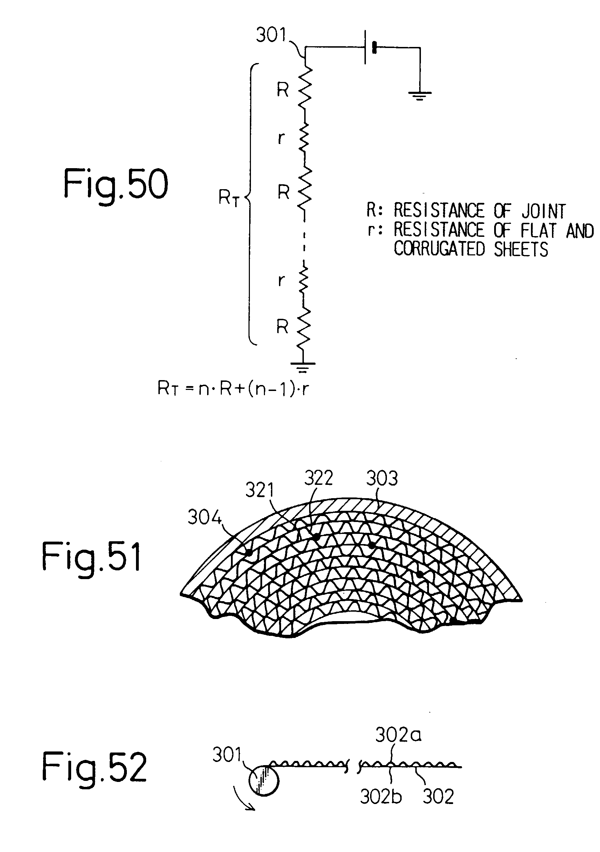

Figure 50 shows an equivalent circuit of the catalytic converter according to the 22nd embodiment. Each joint 304 has a resistance of R and the flat and corrugated sheets between the two joints 304 have a resistance of r. Then, a combined resistance of RT is expressed as $n \cdot R + (n-1) \cdot r$ where n is the number of the joints 304. Accordingly, the quantity of heat generated by the joints 304 is expressed as $Q \cdot n \cdot R / RT$ where Q is supplied power. Increasing the thickness of the flat sheet 302a decreases the combined resistance RT, so that the quantity of heat generated at the joints 304 will be increased if the power is unchanged. Increasing the thickness of the flat sheet 302a improves the durability of the catalyst carrier.

Figure 51 is a sectional view showing an electrically heating catalytic converter according to a 23rd embodiment of the present invention. Unlike the 22nd embodiment that forms each joint 304 with a valley of a layer of a corrugated sheet, a layer of a flat sheet, and a crest of an adjacent inner layer of the corrugated sheet, the 23rd embodiment forms a joint 304 at a contact between a layer of a flat sheet 321 and a layer of a corrugated sheet 322. Namely, each joint of the 23rd embodiment is formed of two layers instead of three of the 22nd embodiment. This means that the quantity of heat generated at each joint 304 of the 23rd embodiment is two thirds of that of the 22nd embodiment, and that the 23rd embodiment involves a shorter temperature increasing period. As a result, a catalyst carrier according to the 23rd embodiment is quickly heated to early start the purification of HC after the start of an engine. Since the resistance of each joint 304 according to the 23rd embodiment is large, the number of the joints 304 may be increased if the catalytic converter is operated under a constant voltage.

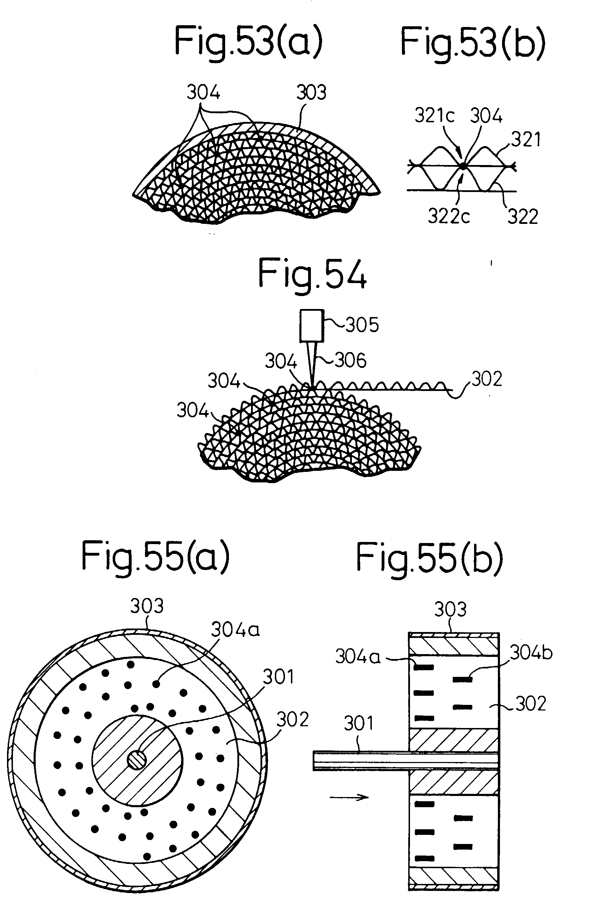

Figures 52 and 53 show an electrically heating catalytic converter according to a 24th embodiment of the present invention. A corrugated band 302 made of flat and corrugated metal sheets is wound around a center electrode 301 such that the corrugated sheet 302a comes outside the flat sheet 302b as shown in Fig. 52. The wound band 302 is stored in an outer casing 303, to form a catalyst carrier. Figure 53 is a front view showing a part of the completed catalyst carrier. Each joint 304 is formed with a valley 321c of a layer of the corrugated sheet, a layer of the flat sheet, and a crest 322c of an adjacent inner layer of the corrugated sheet.

Figure 54 shows a method of forming each joint 304 with use of a laser welder 305. A laser beam 306 is emitted to weld a valley of an external layer of the corrugated sheet. The flat sheet 302 is wound, and joints 304 are successively formed. This method is possible because the corrugated sheet is outside the flat sheet. This embodiment easily joins the flat and corrugated sheets with the corrugated sheet being outside the flat sheet. An outermost layer will be the flat sheet, which is attached to the outer casing 303, to improve the strength of the catalyst carrier.

Figure 55(a) is a cross-sectional view showing an electrically heating catalytic converter according to a 25th embodiment of the present invention, and Fig. 55(b) is a longitudinal section showing the same. A corrugated band made of flat and corrugated sheets is wound around a center electrode 301 and stored in an outer casing 303, to form a catalyst carrier 302. Joints 304a and 304b are made by a laser welder while the corrugated band is being wound. The joints 304a are arranged on the upstream side of the carrier 302, and the joints 304b are arranged around the longitudinal center of the carrier 302. The joints 304a and 304b alternate in a radial direction.

When power is supplied to the center electrode 301 and outer casing 303 at the start of an engine, the joints 304a and 304b generate heat. When exhaust from the engine is rich, it contains a large quantity of incompletely burnt components. If there are only the upstream joints 304a, the heat of catalytic reactions may be conducted to the downstream side of the carrier 302, to activate the carrier as a whole in a short time. When the exhaust reaches a theoretical air-fuel ratio, the incompletely burnt components in the exhaust become smaller. This results in reducing the heat of reactions. Accordingly, this embodiment arranges the joints 304a and 304b in two steps in the axial direction as shown in Fig. 55, to easily activate the whole of the carrier 302.

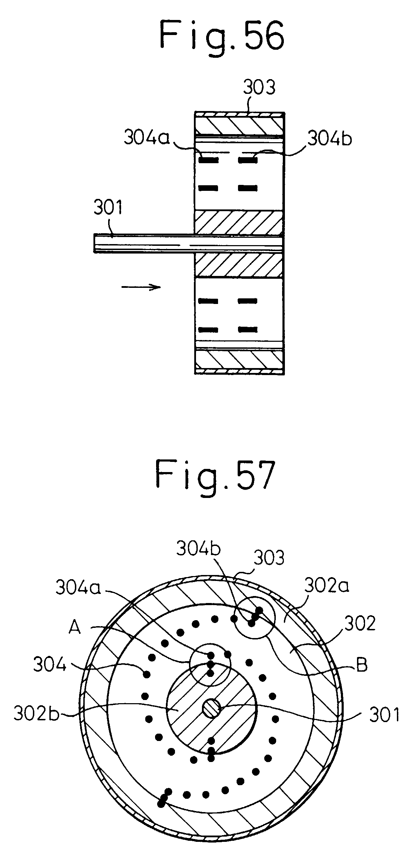

Figure 56 shows a modification of the 25th embodiment of the present invention. This modification arranges central joints 304b in line with upstream joints 304a. If many joints are employed, this modification provides the same effect as the 25th embodiment.

Figure 57 is a sectional view showing an electrically heating catalytic converter according to a 26th embodiment of the present invention. A corrugated band formed of flat and corrugated metal sheets is wound around a center electrode 301 and stored in an outer casing 303, to form a catalyst carrier. A joined area 302a is formed along the outer casing 303, and a joined area 302b is formed around the center electrode 301. In each of the joined areas 302a and 302b, contacts between the flat and corrugated sheets are joined to each other by discharge welding, etc. Inner joints 304 are arranged as shown in the figure. In areas A and B adjacent to the joined areas 302a and 302b, the inner joints 304a and 304b are radially oriented so that the inner joints 304a and 304b are connected to the joined areas 302a and 302b, respectively.

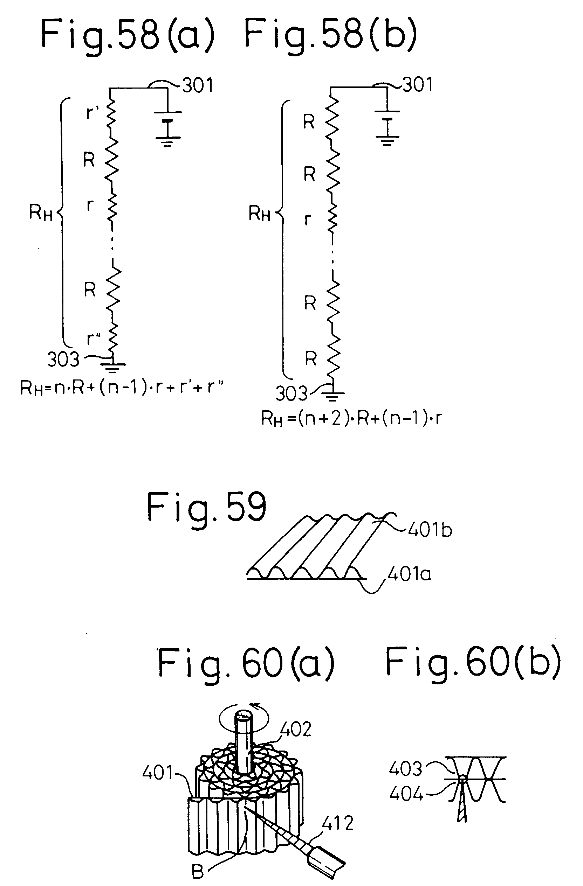

If the inner joints 304a and 304b are not directly conductive to the joined areas 302a and 302b, the catalytic converter will have resistance RH shown in Fig. 58(a). Namely, a current flows from end ones of the joints 304 to the connection areas 302a and 302b through the corrugated band. In this case, the resistances r' and r'' of the corrugated band are uncertain to manage the resistance RH of the catalytic converter. When the end ones 304a and 304b among the joints 304 are connected to the joined areas 302a and 302b as shown in Fig. 58(b), the resistance RH will be a function of the resistance R of the joints and the resistance r of the corrugated band between the joints, so that the resistance RH may be accurately managed.

Figures 59 to 61 show essential parts of an electrically heating catalytic converter according to a 27th embodiment of the present invention. A corrugated band serving as a heating catalyst carrier 401 is formed from a flat metal sheet 401a and a corrugated metal sheet 401b as shown in Fig. 59. The band 401 is coated with an insulation film. The band 401 is wound around a center electrode 402 and welded by laser 412. The welded spots serve as hot spots. Each hot spot is formed where a valley 403 of a corrugated layer meets a crest 404 of another corrugated layer. Namely, the hot spots are not formed at optional positions, to deteriorate the workability of manufacturing the hot spots.

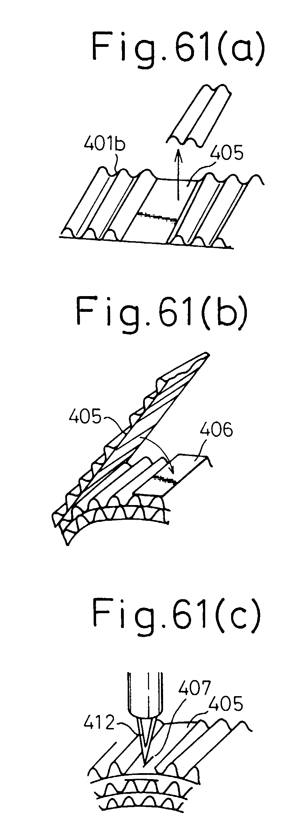

Accordingly, this embodiment cuts the corrugated sheet at proper positions. When the corrugated band is wound around the center electrode 402, a flat strip is joined to each cut formed on the corrugated sheet. As a result, the hot spots may be formed at optional positions. Namely, the corrugated sheet 401b is cut to form a cut 405 as shown in Fig. 61(a). When the corrugated band is wound around the center electrode 402, a flat strip 406 is joined to the cut 405 and to an adjacent inner layer as shown in Fig. 61(b). Thereafter, a hot spot 407 is formed on the cut 405 by laser welding as shown in Fig. 61(c). In this way, the embodiment enables the hot spots to be formed at optional positions with the laser 412 being easily positioned.

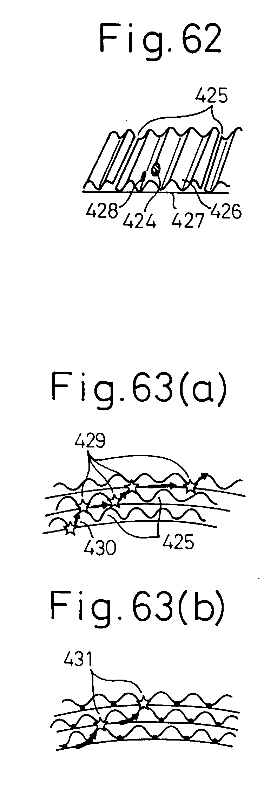

Figures 62 and 63 show essential parts of an electrically heating catalytic converter according to a 28th embodiment of the present invention. Only the difference of the 28th embodiment from the 27th embodiment will be explained. In Fig. 62, a corrugated sheet 426 is cut at a position 425 around a crest 424 where a hot spot is to be formed. The corrugated sheet 426 is joined with a flat sheet 427 only at a laser-welded spot 428. Each hot spot position is processed as shown in Fig. 62. While a corrugated band formed of the corrugated and flat sheets 426 and 427 is being wound around a center electrode into a catalyst carrier, the hot spots are formed by laser welding.

Figure 63(a) shows a part of a current path of the catalyst carrier. When a voltage is applied to the center electrode,

EP 0 604 868 B1

a current 429 flows from the center electrode toward an outer casing. Then, each of the hot spots of high resistance generates heat. Figure 63(b) shows a current path of a catalyst carrier without the cuts 425. In this case, the flat and corrugated sheets are entirely joined with each other to have low resistance. Accordingly, only hot spots 431 generate heat. In this way, the 28th embodiment forms the hot spots even at the joints between the flat and corrugated sheets, to increase the number of the hot spots and easily activate catalyst.

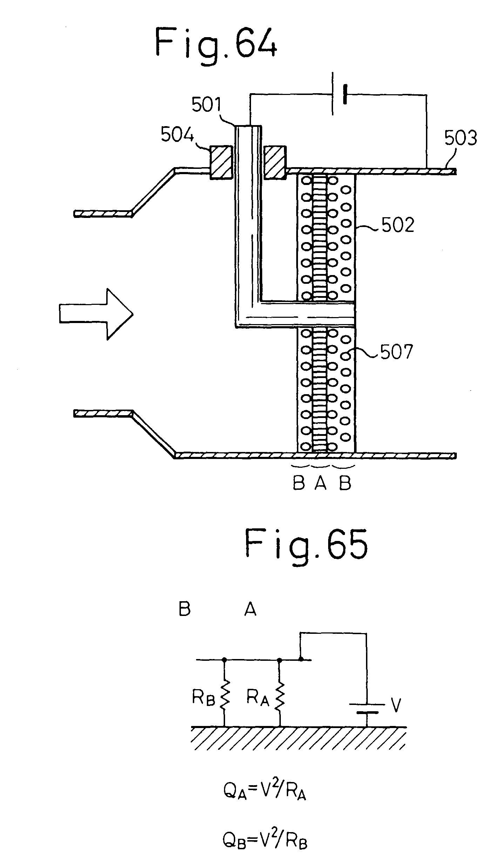

Figures 64 to 70 show a catalytic converter according to a 29th embodiment of the present invention. In Figs. 64 to 67, a flat sheet 505 and a corrugated sheet 506 are wound around a positive electrode 501 into a catalyst carrier 502. Areas B of the sheets 505 and 506 have many resistance adjusting holes 507. The areas B longitudinally extend between ends of each of the sheets 505 and 506. Figure 65 is an equivalent circuit formed between the positive electrode 501 and a casing 503 to which a DC voltage is applied. The areas B and an area A defined between the areas B extend in parallel with each other.

In each of the areas B, the adjusting holes 507 restrict a current path, so that the resistance RB of the areas B is very high compared with the resistance RA of the area A. Accordingly, the areas B generate substantially no heat. Since the resistance RA of the area A is low, a current mostly flows through the area A, which generates heat. Heat quantity QA generated in the area A is $V^2/RA$, and heat quantity QB generated in the areas B is $V^2/RB$ where QA>QB. When a voltage is applied, the area A generates heat to quickly reach a catalyst activation temperature, to thereby purify noxious components contained in exhaust. When the area A reaches the catalyst activation temperature to start purifying the noxious components in the exhaust, the heat of catalytic reactions increases the temperature of the other areas. As the catalytic reactions advance, the heat of the reactions begins to heat a main catalytic converter.

In this way, the 29th embodiment promptly heats the area A to the catalyst activation temperature at low engine temperature and quickly purifies exhaust. Since only the area A of the catalyst carrier 502 is electrically heated, power consumption for heating the carrier 502 is greatly reduced.

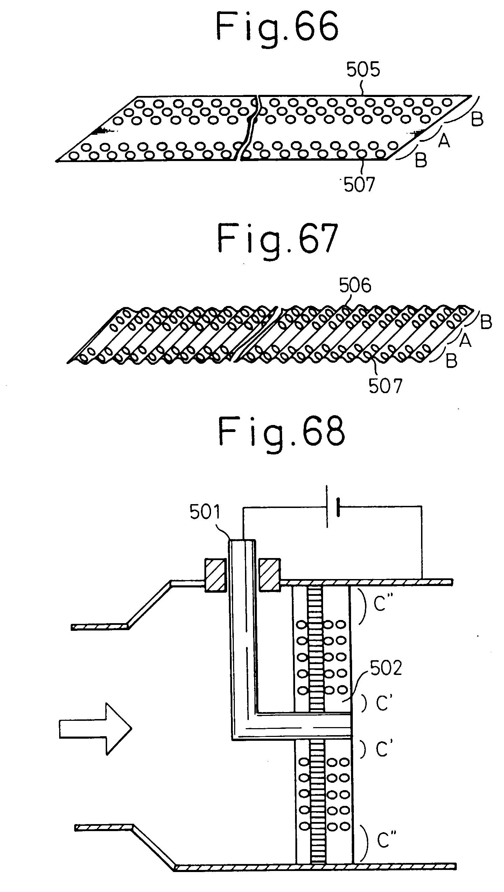

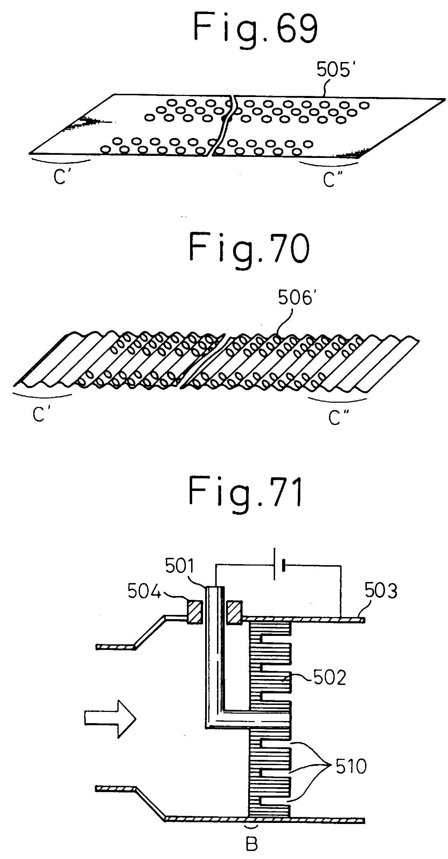

Figures 68 to 70 show a catalytic converter according to a 30th embodiment of the present invention. The 30th embodiment has a different heating area from the 29th embodiment. Only the difference will be explained. A catalyst carrier 502 of the 30th embodiment has an area C' adjacent to a positive electrode 501 and an area C'' adjacent to an outer casing. The areas C' and C'' have no adjusting holes 507. The carrier 502 is made of a flat sheet 505' and a corrugated sheet 506' as shown in Figs. 69 and 70. The sheets are wound around the positive electrode 501 into the carrier 502. In each of the areas C' and C'', the current concentration of the area A is equal to that of the area B, so that the areas C' and C'' generate no heat. This results in reducing a heating area and power consumption.

Although the shape of the adjusting holes of the 29th and 30th embodiments is circle, the shape may be rectangle, slit, or any other. According to the 29th and 30th embodiments, the catalyst carrier 502 locally generates heat when energized, to reduce power consumption.

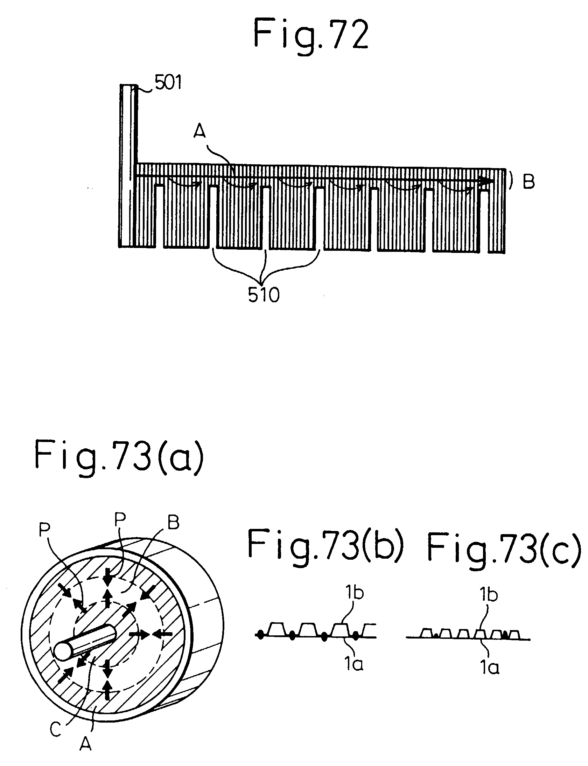

Figures 71 and 72 show a catalytic converter according to a 31st embodiment of the present invention. This embodiment forms axial slits on a catalyst carrier, to generate no heat at the slits. The slits cut current paths, so that only the upstream side of the carrier where no slits exist generate heat. This arrangement reduces power consumption. In Fig. 71, a corrugated metal band formed of flat and corrugated metal sheets is wound around a center electrode 501 and stored in an outer casing 503, to form the catalyst carrier. The center electrode 501 is guided to the outside through an insulation material 504. Figure 72 shows an extended view of the metal band 502 connected to the center electrode 501. The slits 510 are formed on the corrugated band 502 in parallel with the center electrode 501. These slits are formed before the band 502 is wound around the center electrode 501.

When a voltage is applied to the center electrode 501 and outer casing 503, a current flows in the direction of an arrow mark A. An area B defined on the upstream side of the band 502 is the only area that generates heat because the area B has high current density. Since the current collectively flows through the area B having a small heat mass, the temperature of catalyst rapidly increases even with small electric power. When the catalyst in the upstream area B speedily reaches a catalyst activation temperature, incompletely burnt components in exhaust are burnt, so that the whole catalyst quickly reaches the activation temperature.

Figure 73 shows a catalytic converter according to a 32nd embodiment of the present invention. When a flat sheet 1a and a corrugated sheet 1b are attached to each other with every valley or crest being spot-welded as shown in Fig. 73(b), rigidity against axial compression force will be excessively strong. As a result, when the sheets 1a and 1b are exposed to high temperatures under high engine load, the sheets 1a and 1b will thermally expand to cause large thermal stress, which may crush the corrugation or bend the flat sheet. It is possible to attach the flat sheet 1a and corrugated sheet 1b to each other with, for example, every fifth valley or crest being welded as shown in Fig. 73(c). This technique reduces radial rigidity and provides a soft structure, which may be dislocated toward a downstream side due to the pressure of exhaust, to cause a scooping phenomenon.

Accordingly, the 32nd embodiment employs both the rigid and soft structures. The soft structure absorbs thermal expansion, to improve thermal durability. As shown in Fig. 73, in areas A and C in the vicinities of an outer casing and a center electrode, every valley or crest of the corrugated sheet 1b is welded to the flat sheet 1a to form the rigid structure of Fig. 73(b). In an intermediate area B between the areas A and C, every fifth valley or crest of the corrugated sheet 1b is spot-welded to the flat sheet 1a, to form the soft structure of Fig. 73(c). When the catalytic converter is subjected to high temperatures, the rigid structures A and C will cause thermal expansion P, which is absorbed by the soft structure B, to thereby prevent crush of the corrugations. At the same time, the rigid structures A and C prevent the scoping that the converter is deformed toward the downstream side due to the pressure of exhaust.

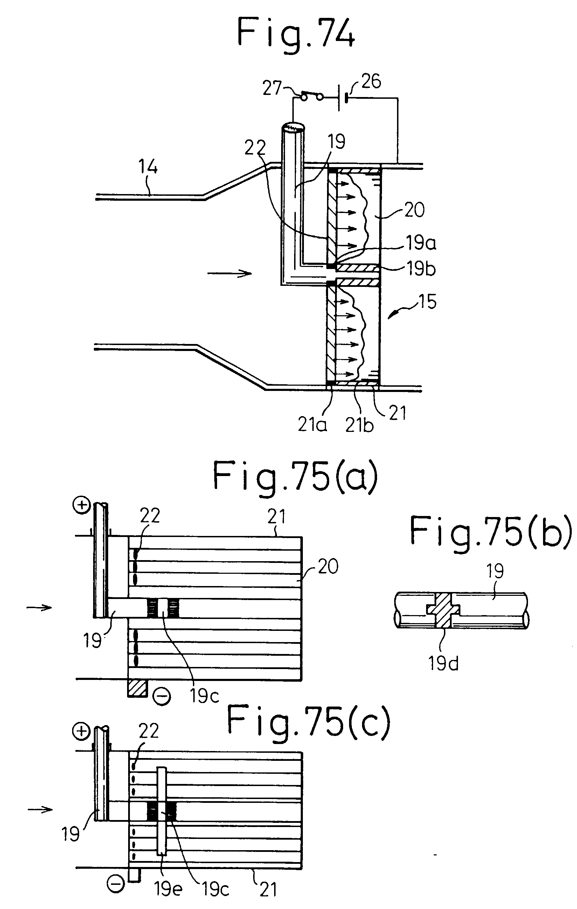

Figure 74 shows a catalytic converter according to a 33rd embodiment of the present invention. This embodiment is basically the same as the embodiment of Fig. 5. The same parts as those of Fig. 5 are represented with like reference marks, and only the difference of the 33rd embodiment from Fig. 5 will be explained.

A center electrode 19 is connected to a catalyst carrier 20. The center electrode 19 involves a conductive part 19a at an upstream end where short-circuit paths 22 are formed. Except the conductive part 19a, the center electrode 19 is covered with an insulation layer 19b to insulate the center electrode 19 from the catalyst carrier 20. Similarly, an outer casing 21 connected to the carrier 20 involves a conductive part 21a at an upstream end adjacent to the short-circuit paths 22. The other part of the outer casing 21 is covered with an insulation layer 21b to insulate the casing 21 from the carrier 20. This arrangement collectively supplies electricity to the narrow areas involving the parts 19a and 21a, to locally heat catalyst.

Figure 75 shows a catalytic converter according to a 34th embodiment of the present invention. Similar to the 33rd embodiment, a center electrode 19 is connected to a catalyst carrier 20. As shown in Fig. 75(a), the center electrode 19 has a clearance 19c so that the electrode 19 is conductive to the carrier 20 only in an area corresponding to heat generation zones 22. Alternatively, an insulation material 19d is inserted into the center electrode 19 as shown in Fig. 75(b), to provide the same insulation effect as Fig. 75(a). Instead, a clearance 19c may be formed in the middle of the center electrode 19, to cut a current path of the electrode 19 as shown in Fig. 75(c). In this case, a radial slit 19e is formed in the carrier 20 behind the heat generation zones 22. The carrier 20 is made of flat and corrugated metal sheets wound around the center electrode 19. The 34th embodiment limits a current path to the upstream side of the carrier 20, to shorten an electric circuit and efficiently generate heat.

As explained above, the 33rd and 34th embodiments shorten or narrow an electric circuit, to save power.

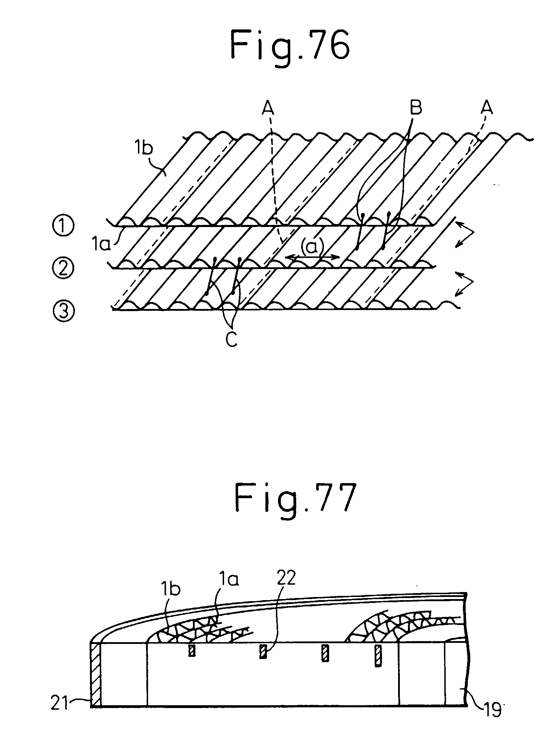

Figure 76 shows a catalytic converter according to a 35th embodiment of the present invention. Flat and corrugated oxide metal sheets 1a and 1b are laminated one upon another, and every fifth valley or crest of the corrugated sheet 1b is spot-welded to the flat sheet 1a as indicated with a reference mark A, to form a corrugated band. The band is wound around a center electrode, to form a catalyst carrier. Adjacent layers of the band are welded to each other at optional positions with laser. Namely, layers 1 and 2 are joined with each other at positions B with a valley of the layer 1 being joined with a crest of the layer 2. Similarly, the layers 2 and 3 are joined with each other at positions C with a valley of the layer 2 being joined with a crest of the layer 3.

When a current flows from the layer 3 toward the layer 1, the current passes only for a distance "a" between the position A adjacent to the position C and the position B in the intermediate layer 2. Namely, electric resistance varies depending on the laser weld positions. Accordingly, the 35th embodiment determines in advance the distance between the laser weld positions B and C, the spot welding positions A, and the number of the spot welding positions, to stabilize resistance.

Figure 77 shows a part of a catalytic converter according to a 36th embodiment of the present invention. This embodiment laser-welds a flat sheet 1a and a corrugated sheet 1b, or a combinations of them together, to form axial hot spots 22. The hot spots have different axial lengths depending on their positions. For example, the hot spots 22 adjacent to a center electrode 19 are long, and the hot spots 22 adjacent to an outer casing 21 are short. As a result, optional heat quantities are achievable at optional positions in the catalytic converter.

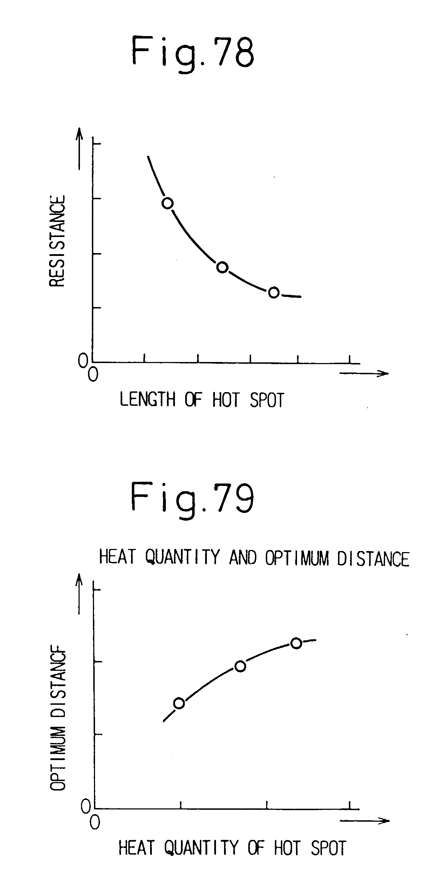

Figure 78 shows a relationship between the length of a hot spot and the resistance thereof. The longer the length of a given hot spot, the lower the resistance thereof and the higher the heat quantity thereat.

Figure 79 shows a relationship between the heat quantity at a hot spot and an optimum hot spot distance. The larger the heat quantity, the longer the hot spot distance.

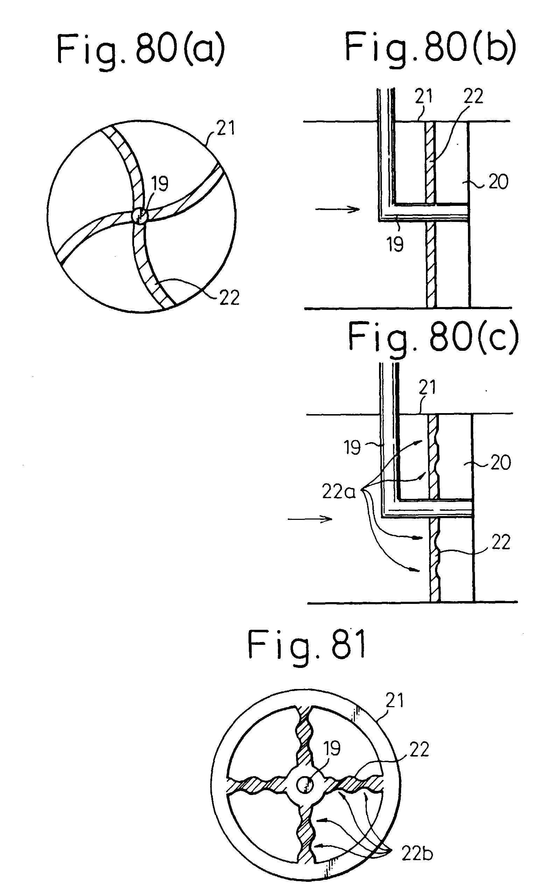

Figures 80(a) and 80(b) show a catalytic converter according to a 37th embodiment of the present invention. In Fig. 80(a), a hatched area corresponds to a heat generation area 22, which is disposed on an upstream end face of a catalyst carrier. The heat generation area 22 is curved. In this way, the heat generation area 22 may have an optional pattern.

Figure 80(c) shows a modification of the 37th embodiment. This modification employs a heat generation area 22 having axial short sections 22a. Each of the short sections 22a is formed by shortening a joint length, to positively increase the quantity of heat generated by the section.

Figure 81 shows a catalytic converter according to a 38th embodiment of the present invention. This embodiment employs a heat generation area 22 having a cross shape and narrowed parts 22b. The narrowed parts 22b locally provide larger heat quantities to speedily start catalytic reactions. This results in improving the performance of the converter and reducing power consumption.

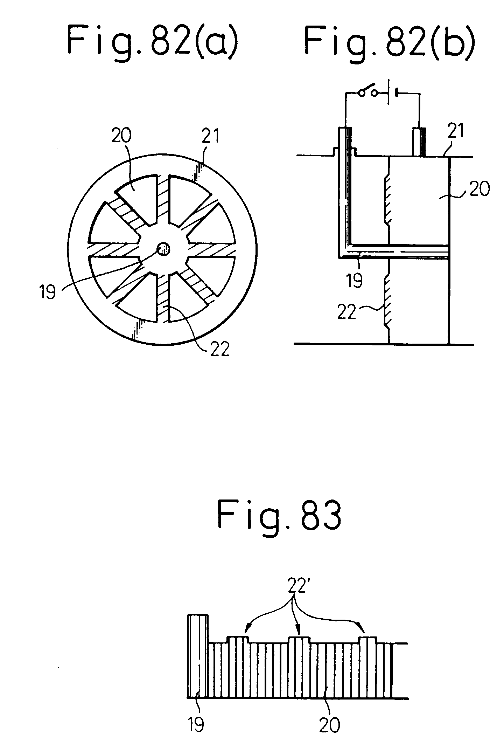

Figures 82(a), 82(b), and 83 show a catalytic converter according to a 39th embodiment of the present invention. This embodiment forms surface heat generation paths 22 of optional pattern on an upstream end face of a catalyst carrier 20. The paths 22 protrude from the upstream end face that generates no heat. This arrangement reduces an escape of heat and promotes the heat generation effect of the paths 22. To fabricate the paths 22, projections 22' are formed on metal sheets or on a combination of flat and corrugated metal sheets before the sheets are wound around a center electrode 19, so that the projections 22' may be continuous to form the protruding heat generation paths 22 once the sheets are wound around the center electrode 19.

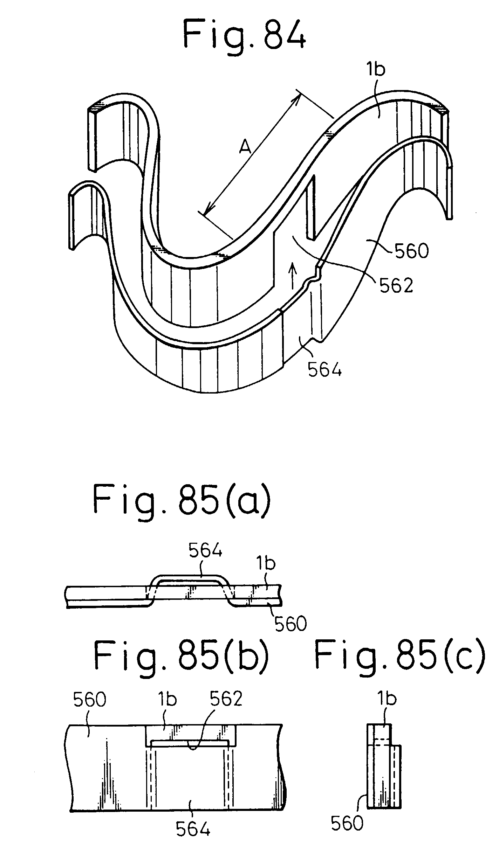

Figures 84 to 88 show a catalytic converter according to a 40th embodiment of the present invention. A flat sheet 1a and a corrugated sheet 1b are wound around a center electrode 19, to form a catalyst carrier. At least one of the wound sheets 1a and 1b (in the figure, the corrugated sheet 1b) is provided with an insulation space 562 at each position A where the corrugated and flat sheets are not in contact with each other. The insulation space 562 (the position A provided with the space 562 is referred to as the bridge) is prepared by cutting the position A with only an axial upstream end being left for several millimeters. A reinforce sheet 560 covered with an oxide insulation film, etc., is attached to the corrugated sheet 1b. The reinforce sheet 560 has projections 564 engaging with the spaces 562. The reinforce sheet 560 is attached to the corrugated sheet 1b by lamination or by winding.

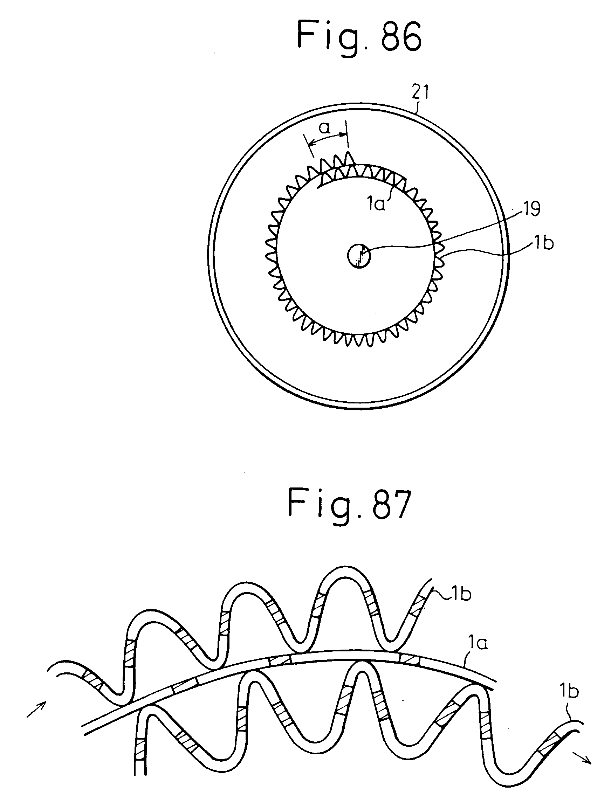

In Fig. 86, the flat and corrugated sheets 1a and 1b are wound around the center electrode 19. The flat and corrugated sheets 1a and 1b in an area "a" are provided with the bridges. Figure 87 is an enlarged view showing the area "a" of Fig. 86. In the figure, the reinforce sheet 560 is omitted. In this way, the bridges in the area "a" narrow current paths, to collect a current flowing from the center electrode (positive electrode) 19 toward an outer casing (negative electrode) 21 to the bridges, to thereby generate heat at the bridges. This arrangement is so structured that the current must pass the bridges to reach the grounding (outer casing) 21. In Fig. 87, hatched parts correspond to the insulation spaces 562, i.e., the narrowed current paths.

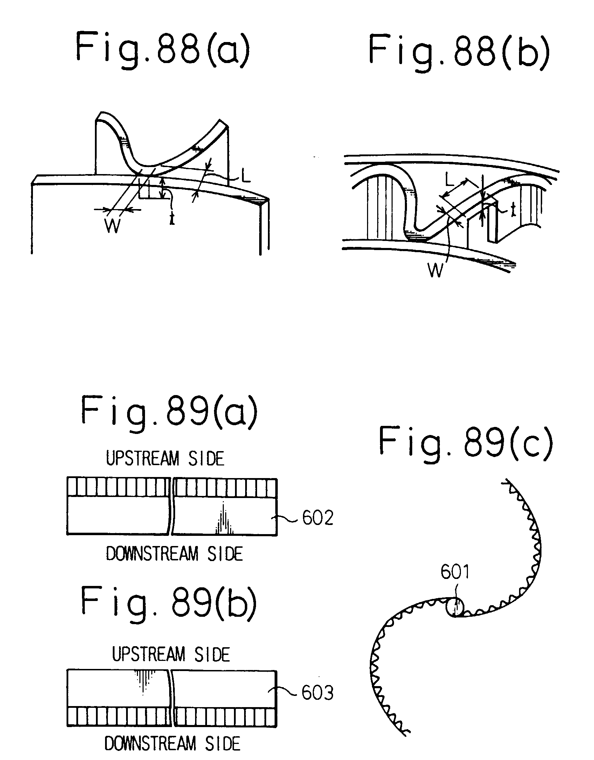

Figure 88(a) shows a part with no bridge, and Fig. 88(b) shows a part with a bridge. In Fig. 88(a), a joint between a corrugated sheet and a flat sheet corresponds to a narrowed current path serving as a hot spot. To secure the strength and durability of the joint, the area of the joint must be large. On the other hand, to reduce power consumption, the area of the joint must be small to provide a narrow current path.

In Fig. 88(a), the depth t of the joint, i.e., a hot spot must be 3.0 mm or over to secure structural strength. The thickness L of the hot spot is equal to the thickness of two sheets. For example, L = 100 micrometers = 0.1 mm. The width W of the hot spot is in the range of 50 to 200 micrometers due to fluctuations in winding pressure. Then, the resistance R of the hot spot is expressed as follows:

$$R = Pr \cdot [L/(W \cdot t)] \cdot 1/N$$

where Pr is a specific resistance (ohm cm) and N is the number of current paths. If W fluctuates, the resistance R also fluctuates, so that heat will not be uniformly generated. Since L is determined by the thicknesses of the sheets, the resistance R will be increased if the joint is thickened in a radial direction. This, however, has a limit. Namely, the cross-sectional area, i.e., the radius of a catalytic converter is limited. Increasing t will be advantageous in improving the durability of the joint, but it will increase power consumption. In addition, inaccuracy in the width of brazing that determines t will fluctuate the resistance R. For example, the resistance R of a current path formed by one hot spot is calculated as follows:

$$R = 0.004 \times [0.01/(0.005 \text{ to } 0.020)] \times 0.3$$

$$= 0.027 \text{ to } 0.007 \text{ (ohms)}$$

Namely, the resistance R involves four times of fluctuations.

When the bridge of Fig. 88(b) is employed, a current path formed by the bridge is not affected by the pressing force of the sheets, so that the resistance R of the current path is as follows:

$$R = 0.004 \times 0.05/0.005 \times 0.3$$

$$= 0.133 \text{ (ohms)}$$

The resistance R is large and fluctuations are reduced because fluctuations in W are limited to fluctuations in the thickness of the sheet.

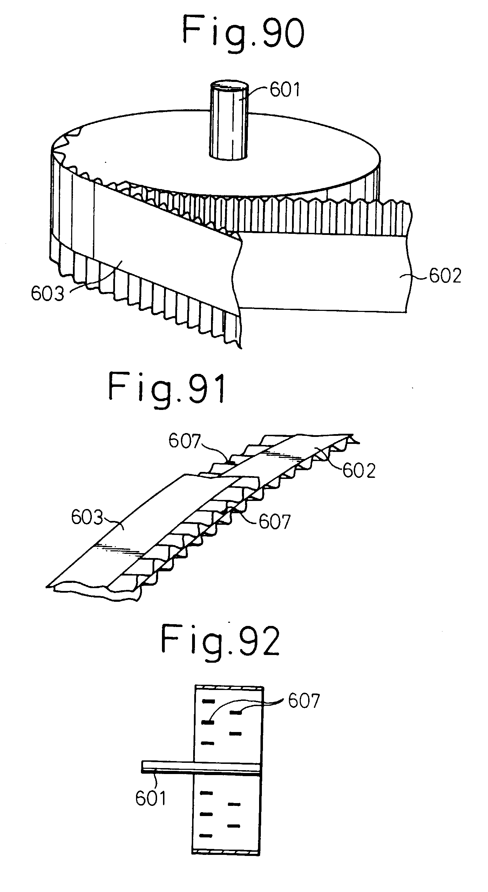

Figures 89 to 92 show a catalytic converter according to a 41st embodiment of the present invention. This embodiment employs a corrugated sheet and a flat sheet with the width of the flat sheet being narrower than that of the corrugated sheet. The sheets are joined to each other into a corrugated band 602 (Fig. 89(a)) with the no-flat part being positioned on an upstream side, and into a corrugated band 603 (Fig. 89(b)) with the no-flat part being positioned on a downstream side. The two types of bands 602 and 603 are alternately wound around a center electrode 601 into a catalyst carrier as shown in Figs. 89(c) and 90. Hot spots 607 are formed by laser welding, etc. In this case, valleys in the no-flat part of a layer of the bands 602 and 603 are welded to the flat-part of an adjacent inner layer of the bands at positions 607 by laser. As a result, the hot spots 607 are alternately formed on the upstream and downstream sides in the catalyst carrier as shown in Fig. 92. To form the heat spots 607 alternately at the upstream and central positions, the width of the flat sheet of the band 603 must be narrower.

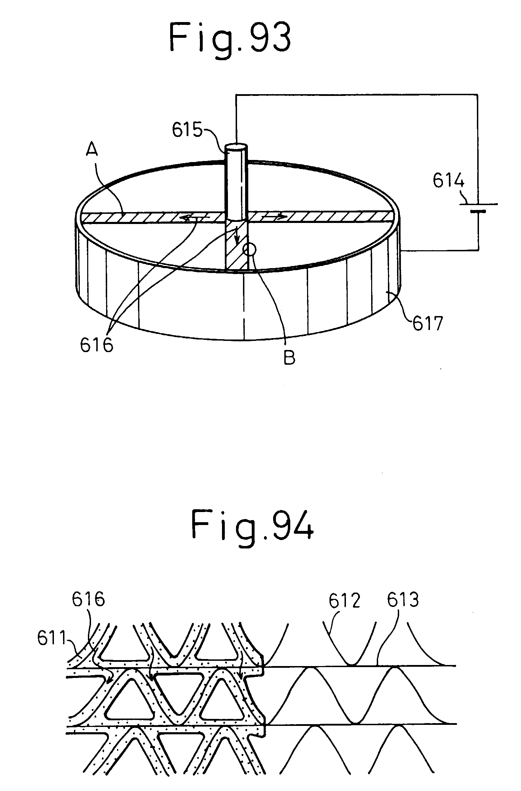

Figure 93 shows a catalytic converter according to a 42nd embodiment of the present invention. Figure 94 is an enlarged view showing a part B of Fig. 93. A hatched area A of Fig. 93 is coated with brazing material 611 to cover layers of corrugated and flat sheets 612 and 613 that form a catalyst carrier, to form current paths on an upstream end face of the catalyst carrier. A current 616 flows from a battery 614 to a center electrode 615 and then to an outer casing 617 through the current paths.

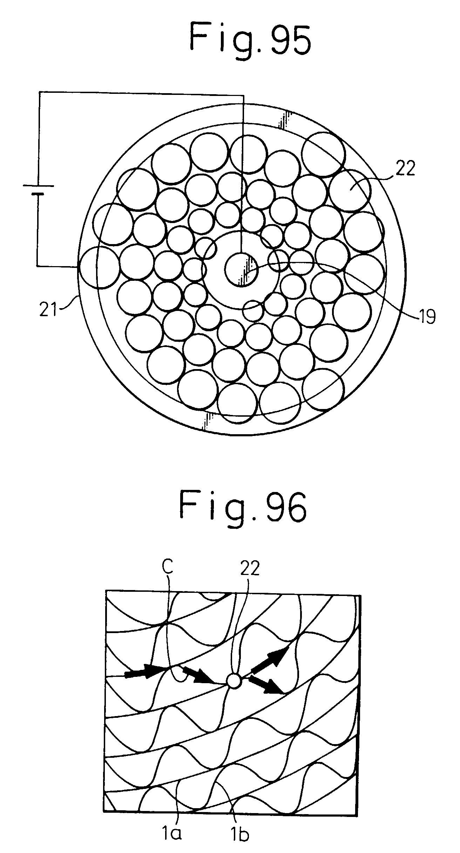

Figures 95 to 98 are views showing a catalytic converter according to a 43rd embodiment of the present invention. A flat metal sheet 1a and a corrugated metal sheet 1b, each coated with an insulation film, are wound in a spiral shape around a center electrode 19, to form a catalyst carrier. These sheets are partly welded to each other by laser to form hot spots 22. To uniformly heat the whole surface of the catalyst carrier, it is necessary to equidistantly arrange the hot spots 22. Since current paths are oriented from the center toward the periphery of the carrier, the hot spots 22 become more sparse from the center toward the periphery. Then, it is impossible to uniformly heat the carrier as a whole.

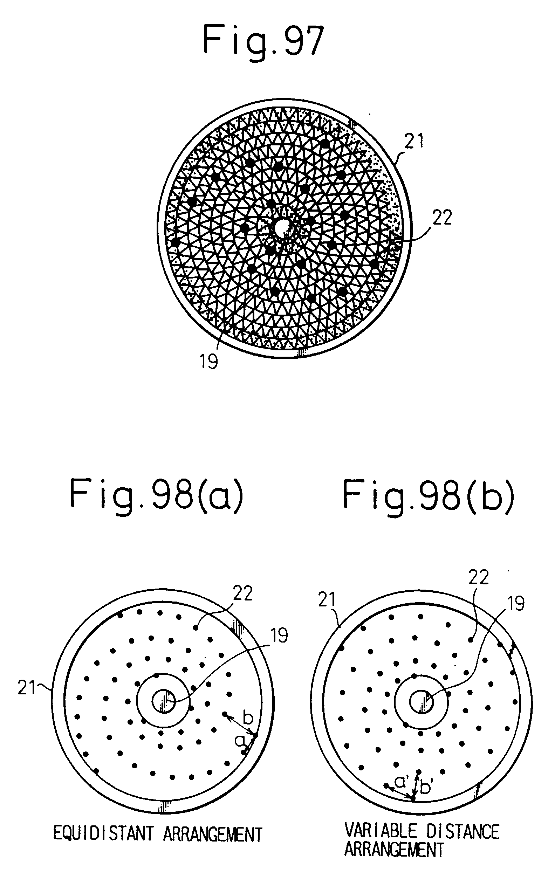

For example, three bands each made of the flat and corrugated metal sheets 1a and 1b are wound around the center electrode 19 starting from three equiangular positions on the electrode 19, and crests of the corrugated sheets 1b are welded to the flat sheet 1a by laser at regular intervals (for example, intervals of five crests), to form a catalyst carrier. A current C flows from the center electrode 19 toward the outer casing 21 always through nearest joints as shown in Fig. 96. As a result, the concentration of the hot spots becomes thinner from the center toward the periphery as shown in Fig. 97. Namely, a distance between the adjacent hot spots becomes larger from the center toward the periphery. Accordingly, the heat generation quantities of the hot spots 22 are set to become larger as they approach the periphery, as indicated with circles in Fig. 95. To change the heat generation quantities of the hot spots 22, the length of each hot spot in the direction of an exhaust flow is changed to change the resistance thereof, as shown in Fig. 78, when the spot is laser welded. Similar to the embodiment of Fig. 77, the hot spots made by laser welding are shortened as they are spaced away from the center electrode, to increase the resistance thereof and the heat generation quantity thereof determined by the resistance and a current ($Ri^2$).

Figure 98(a) shows an example of an equidistant arrangement of hot spots. Figure 98(b) shows an example of a variable distance arrangement of hot spots. In Fig. 98(b), the hot spots 22 are substantially uniformly distributed. In Fig. 98(a), the ratio of a radial distance "b" to a circumferential distance "a" becomes larger as the hot spots 22 approach the periphery. In Fig. 98(b), the ratio of b' to a' is substantially unchanged irrespective of the positions of the hot spots 22.

### Claims

1. An electrically heating catalytic apparatus (10) comprising an electrically conductive catalyst carrier (15), **characterized in that** local hot spots to be energized are arranged at a local narrow area within said catalytic apparatus (10) at an upstream side of the catalyst carrier (15) for heating said area rapidly to an activation temperature.

2. An apparatus according to claim 1, wherein the local hot spots are arranged on the upstream side of the catalyst carrier (15) in an exhaust path of an internal combustion engine.

3. An apparatus according to claim 1, wherein the local hot spots are arranged away from an exhaust inlet end of the catalyst carrier (15).

4. An apparatus according to claim 1, wherein the catalyst carrier (15) is prepared by alternately laminating metal sheets (16, 17) and insulation layers, and the local hot spots are made by partly electrically joining the metal sheets (16, 17).

5. An apparatus according to claim 4, wherein the local hot spots are formed as a local current path (22, 36, 43, 45, 46) made by continuously electrically connecting electrodes to each other.

6. An apparatus according to claim 4, wherein the catalyst carrier is made of corrugated and flat metal sheets (17,

EP 0 604 868 B1

16) each having a surface insulation layer, and the corrugated sheet (17) is made flat at joints of the hot spots.

7. An apparatus according to claim 4, wherein the catalyst carrier is made of corrugated and flat metal sheets (17, 16) each having a surface insulation layer, and flat strips (406) are inserted between the corrugated and flat sheets (17, 16) at joints of the local hot spots.

8. An apparatus according to claim 4, wherein the catalyst carrier (15) is provided with inner spaces (233b; 233b') adjacent to the local hot spots (233a; 233a').

9. An apparatus according to claim 4, wherein the catalyst carrier (15) is prepared by alternately winding metal sheets (16, 17) and insulation layers around a center electrode (301), the carrier (15) is stored in a metal casing (303) serving as the other electrode, and the local hot spots are locally formed at axial positions on the carrier so that the carrier (15) and the casing (303) are connected to each other only through the axial positions.

10. An apparatus according to claim 4, wherein the catalyst carrier (15) is formed by alternately winding metal sheets (16, 17) and insulation layers around a center electrode (301), the carrier (15) is stored in a metal casing (303) serving as the other electrode, and the local hot spots are locally formed at axial positions on the carrier (15) so that the metal sheets (16, 17) and the center electrode (301) are connected to each other only through the axial positions.

11. An apparatus according to claim 10, wherein an insulation section (19b, 19c, 19d) is formed in the middle of the center electrode (19) so that no current flows from the axial positions where the local hot spots are formed according to claim 10 toward a downstream side viewed from a connection between the center electrode (19) and a power source, and the metal sheets (16, 17) and center electrode (19) are connected to each other only through the axial positions.

12. An apparatus according to claim 4, wherein the catalyst carrier is prepared by combining flat and corrugated metal sheets (17, 16) into a band (18), coating the band with an insulation layer, and winding the band, the local hot spots are formed by partly electrically joining the layers of the band to each other, and the positions of the joints between the corrugated and flat sheets (17, 16) and the area of each of the joints are optionally selected.

13. An apparatus according to claim 4, wherein the catalyst carrier (15) is prepared by combining flat and corrugated metal sheets (302b, 302a) into a band (302) and coating the band with an insulation layer, and the band (302) is wound around the center electrode (301) with valleys (321c) of an outermost layer of the corrugated sheet being electrically jointed with an adjacent layer of the band (302) in order to form the local hot spots.

14. An apparatus according to claim 4, wherein the catalyst carrier is prepared by combining flat and corrugated metal sheets (1a, 1b) into a band, coating the band with an insulation layer, and winding the band, the layers of the band are locally electrically joined with one another from the outside in order to form the local hot spots, and an outside one of the corrugated and flat sheets (1a, 1b) is cut at the positions (A) of the local hot spots.

15. An apparatus according to claim 4, wherein the metal sheets (16, 17) on each side of the local hot spots are provided with insulation layers.

16. An apparatus according to claim 4, wherein the catalyst carrier (15) is prepared by alternately laminating corrugated and flat metal sheets (17, 16) each having a surface insulation layer, and the adjacent corrugated and flat sheets (17, 16) of the carrier (15) are electrically partly joined with each other to form the local hot spots.

17. An apparatus according to claim 4, wherein the local hot spots are distributed and, among the distributed hot spots, those closest to the electrodes (19, 21) are electrically connected to the electrodes (19, 21).

18. An apparatus according to claim 4, wherein the local hot spots are distributed, and the lengths of the hot spots in the axial direction of the catalyst carrier (15) are changed depending on the positions of the hot spots in the carrier (15).

19. An apparatus according to claim 4, wherein the catalyst carrier is prepared by combining corrugated and flat metal sheets (17, 16) into a band (18), and the number of joints between the corrugated and flat sheets (17, 16) in the vicinity of the local hot spots is smaller than that of the other parts in order to provide a soft structure.

18

20. An apparatus according to claim 1, wherein the length of each of the local hot spots is very short in the direction of an exhaust flow in the exhaust path of the engine compared with the length of the catalyst carrier (15) in the same direction.

21. An apparatus according to claim 20, wherein the catalyst carrier (15) is provided with slits (510) oriented in the direction of the exhaust flow so that the remaining parts of the carrier may (15) form the local hot spots.

22. An apparatus according to claim 21, wherein the catalyst carrier (15) is made by alternately laminating metal sheets (16, 17) and insulation layers, the slits (510) are formed at non-contact parts with respect to adjacent layers, and the insulation layers are inserted into the slits (510).

**Patentansprüche**

1. Elektrisch beheizbare katalytische Vorrichtung (10) mit einem elektrisch leitfähigen Katalysatorträger (15),
   **dadurch gekennzeichnet, daß**
   zu erregende örtliche Hitzepunkte an örtlich engen Bereichen innerhalb der katalytischen Vorrichtung (10) an einer Stromaufseite des Katalysatorträgers (15) angeordnet sind, um den Bereich schnell auf eine Aktivierungstemperatur zu heizen.

2. Vorrichtung nach Anspruch 1,
   **dadurch gekennzeichnet, daß**
   die örtlichen Hitzepunkte auf einer Stromaufseite des Katalysatorträgers (15) in einem Abgaspfad eines Verbrennungsmotors angeordnet sind.

3. Vorrichtung nach Anspruch 1,
   **dadurch gekennzeichnet, daß**
   die örtlichen Hitzepunkte entfernt von einem Abgaßeinlaßende des Katalysatorträgers (15) angeordnet sind.

4. Vorrichtung nach Anspruch 1,
   **dadurch gekennzeichnet, daß**
   der Katalysatorträger (15) hergestellt ist, indem wechselweise Metallbleche (16, 17) und Isolationsschichten geschichtet werden, wobei die örtlichen Hitzepunkte hergestellt werden, indem die Metallbleche (16, 17) teilweise elektrisch verbunden werden.

5. Vorrichtung nach Anspruch 4,
   **dadurch gekennzeichnet, daß**
   die örtlichen Hitzepunkte als örtliche Strompfade (22, 36, 43, 45, 46) ausgebildet sind, die hergestellt werden, indem Elektroden kontinuierlich elektrisch miteinander verbunden werden.

6. Vorrichtung nach Anspruch 4,
   **dadurch gekennzeichnet, daß**
   der Katalysatorträger aus gewellten und flachen Metallblechen (17, 16) hergestellt ist, wobei jedes eine Oberflächenisolationsschicht hat und das gewellte Blech (17) an den Verbindungen der Hitzepunkte flach ausgebildet ist.

7. Vorrichtung nach Anspruch 4,
   **dadurch gekennzeichnet, daß**
   der Katalysatorträger aus gewellten und flachen Metallblechen (17, 16) hergestellt ist, wobei jedes eine Oberflächenisolationsschicht hat, und flache Streifen (406) sind zwischen den gewellten und flachen Blechen (17, 16) an den Verbindungen der örtlichen Hitzepunkte eingesetzt.

8. Vorrichtung nach Anspruch 4,
   **dadurch gekennzeichnet, daß**
   der Katalysatorträger (15) mit inneren Räumen (233b; 233b∩) versehen ist, die benachbart zu den örtlichen Hitzepunkten (233a; 233a∩) angeordnet sind.

9. Vorrichtung nach Anspruch 4,
   **dadurch gekennzeichnet, daß**

der Katalysatorträger (15) hergestellt ist, indem wechselweise Metallbleche (16, 17) und Isolationsschichten um eine mittige Elektrode (301) gewunden sind, daß der Träger (15) in einem als die andere Elektrode dienenden Metallgehäuse (303) untergebracht ist, und daß die örtlichen Hitzepunkte örtlich an axialen Positionen am Träger derart ausgebildet sind, daß der Träger (15) und das Gehäuse (303) lediglich über die axialen Positonen miteinander verbunden sind.

10. Vorrichtung nach Anspruch 4,
**dadurch gekennzeichnet, daß**
der Katalysatorträger (15) hergestellt ist, indem wechselweise Metallbleche (16, 17) und Isolationsschichten um eine mittige Elektrode (301) herumgewunden sind, daß der Träger (15) in einem als die andere Elektrode dienenden Metallgehäuse (303) untergebracht ist und daß die örtlichen Hitzepunkte derart an axialen Positionen im Träger (15) örtlich ausgebildet sind, so daß die Metallbleche (16, 17) und die mittige Elektrode (301) lediglich über die axialen Positionen miteinander verbunden sind.

11. Vorrichtung nach Anspruch 10,
**dadurch gekennzeichnet, daß**
ein Isolationsabschnitt (19b, 19c, 19d) in der Mitte der mittigen Elektrode (19) derart ausgebildet ist, daß kein Strom von den axialen Positionen, an denen gemäß Anspruch 10 die örtlichen Hitzepunkte ausgebildet sind, zu einer Stromabseite, gesehen von einer Verbindung zwischen der mittigen Elektrode (19) und der Energiequelle, fließt, wobei die Metallbleche (16, 17) und die mittige Elektrode (19) lediglich über die axialen Positionen miteinander verbunden sind.

12. Vorrichtung nach Anspruch 4,
**dadurch gekennzeichnet, daß**
der Katalysatorträger hergestellt wird, indem flache und gewellte Metallbleche (17, 16) zu einem Band (18) kombiniert werden, das Band mit einer Isolationsschicht beschichtet wird und das Band gewunden wird, wobei die örtlichen Hitzepunkte ausgebildet werden, indem die Schichten des Bandes teilweise elektrisch miteinander verbunden werden und die Positionen der Verbindungen zwischen den gewellten und flachen Blechen (17, 16) und der Bereich einer jeden der Verbindungen optional ausgewählt sind.

13. Vorrichtung nach Anspruch 4,
**dadurch gekennzeichnet, daß**
der Katalysatorträger (15) hergestellt wird, indem flache und gewellte Metallbleche (302b, 302a) zu einem Band (302) kombiniert werden, und indem das Band mit einer Isolationsschicht beschichtet wird, wobei das Band (302) um die mittige Elektrode (301) gewunden ist, wobei Täler (321c) der äußersten Schicht des gewellten Bleches mit einer benachbarten Schicht des Bandes (302) elektrisch verbunden sind, um die örtlichen Hitzepunkte auszubilden.

14. Vorrichtung nach Anspruch 4,
**dadurch gekennzeichnet, daß**
der Katalysatorträger hergestellt wird, indem flache und gewellte Metallbleche (1a, 1b) zu einem Band kombiniert werden, das Band mit einer Isolationsschicht beschichtet ist und das Band gewunden ist, wobei die Schichten des Bandes von der Außenseite her miteinander örtlich elektrisch verbunden sind, um die örtlichen Hitzepunkte auszubilden, und ein äußeres von den gewellten und flachen Blechen (1a, 1b) an den Positionen (A) der örtlichen Hitzepunkte ausgespart ist.

15. Vorrichtung nach Anspruch 4,
**dadurch gekennzeichnet, daß**
die Metallbleche (16, 17) auf jeder Seite der örtlichen Hitzepunkte mit einer Isolationsschicht versehen sind.

16. Vorrichtung nach Anspruch 4,
**dadurch gekennzeichnet, daß**
der Katalysatorträger (15) hergestellt wird, indem wechselweise gewellte und flache Metallbleche (16, 17) geschichtet werden, wobei jedes eine Oberflächenisolationsschicht hat, und die benachbarten gewellten und flachen Bleche (16, 17) des Trägers (15) miteinander elektrisch teilweise verbunden sind, um die örtlichen Hitzepunkte auszubilden.

17. Vorrichtung nach Anspruch 4,

**dadurch gekennzeichnet, daß**
die örtlichen Hitzepunkte verteilt sind und, daß unter den verteilten Hitzepunkten diejenigen, die den Elektroden (19, 21) am nächsten liegen, elektrisch mit den Elektroden (19, 21) verbunden sind.

**18.** Vorrichtung nach Anspruch 4,
**dadurch gekennzeichnet, daß**
örtliche Hitzepunkte verteilt sind und daß die Länge der Hitzepunkte in axialer Richtung des Katalysatorträgers (15) abhängig von der Position der Hitzepunkte innerhalb des Trägers (15) verändert wird.

**19.** Vorrichtung nach Anspruch 4,
**dadurch gekennzeichnet, daß**
der Katalysatorträger hergestellt wird, indem gewellte und flache Metallbleche (17, 16) zu einem Band (18) kombiniert werden, wobei die Anzahl der Verbindungen zwischen den gewellten und flachen Blechen (17, 16) in der Nachbarschaft der örtlichen Hitzepunkte geringer ist, als diejenige der anderen Teile, um eine weiche Struktur zur Verfügung zu stellen.

**20.** Vorrichtung nach Anspruch 1,
**dadurch gekennzeichnet, daß**
die Länge eines jeden örtlichen Hitzepunktes in Richtung einer Abgasströmung im Abgaspfad eines Motors sehr kurz im Vergleich zur Länge des Katalysatorträgers (15) in der gleichen Richtung ausgebildet ist.

**21.** Vorrichtung nach Anspruch 20,
**dadurch gekennzeichnet, daß**
der Katalysatorträger (15) mit Schlitzen (510) versehen ist, die in Richtung der Abgasströmung orientiert sind, so daß die verbleibenden Teile des Trägers (15) die örtlichen Hitzepunkte ausbilden können.

**22.** Vorrichtung nach Anspruch 21,
**dadurch gekennzeichnet, daß**
der Katalysatorträger (15) hergestellt wird, indem wechselweise Metallbleche (16, 17) und Isolationsschichten geschichtet werden, wobei die Schlitze (510) bezüglich der benachbarten Schichten an Nichtkontaktteilen ausgebildet sind und die Isolationsschichten in die Schlitze (510) eingesetzt sind.

**Revendications**

**1.** Un appareil de catalyse à chauffage électrique (10) comprenant un support de catalyseur électriquement conducteur (15),
caractérisé en ce que
des points chauds locaux à alimenter en énergie sont disposés sur une zone locale étroite à l'intérieur dudit appareil de catalyse (10) du côté amont du support de catalyseur (15) pour chauffer ladite zone rapidement à une température d'activation.

**2.** Un appareil selon la revendication 1, dans lequel les points chauds locaux sont disposés du côté amont du support de catalyseur (15) dans un passage d'échappement d'un moteur à combustion interne.

**3.** Un appareil selon la revendication 1, dans lequel les points chauds locaux sont disposés à distance d'une extrémité d'admission d'échappement du support de catalyseur (15).

**4.** Un appareil selon la revendication 1, dans lequel le support de catalyseur (15) est préparé en disposant par couches statifiées, de manière alternée, des tôles métalliques (16, 17) et des couches d'isolation, et dans lequel les points chauds locaux sont réalisés en joignant partiellement électriquement les tôles métalliques (16, 17).

**5.** Un appareil selon la revendication 4, dans lequel les points chauds locaux sont formés comme un passage local de courant (22, 36, 43, 45, 46) réalisé en connectant électriquement, de manière continue, des électrodes les unes aux autres.

**6.** Un appareil selon la revendication 4, dans lequel le support de catalyseur est réalisé à partir de tôles métalliques ondulées et plates (17, 16) comportant chacune une couche d'isolation de surface, et dans lequel la tôle ondulée (17) est aplatie aux raccords des points chauds.

7. Un appareil selon la revendication 4, dans lequel le support de catalyseur est réalisé à partir de tôles métalliques ondulées et plates (17, 16) comportant chacune une couche d'isolation de surface, et dans lequel des bandes plates (406) sont insérées entre les tôles ondulées et plates (17, 16) aux raccords des points chauds locaux.

8. Un appareil selon la revendication 4, dans lequel le support de catalyseur (15) est pourvu d'espaces intérieurs (233b ; 233b') adjacents aux points chauds locaux (233a ; 233a').

9. Un appareil selon la revendication 4, dans lequel le support de catalyseur (15) est préparé en enroulant, de manière alternée, des tôles métalliques (16, 17) et des couches d'isolation autour d'une électrode centrale (301), le support (15) est stocké dans un boîtier métallique (303) servant comme autre électrode, et dans lequel les points chauds locaux sont formés localement à des emplacements axiales sur le support de telle sorte que le support (15) et le boîtier (303) soient reliés l'un à l'autre uniquement par les emplacements axiaux.

10. Un appareil selon la revendication 4, dans lequel le support de catalyseur (15) est formé en enroulant, de manière alternée, des tôles métalliques (16, 17) et des couches d'isolation autour d'une électrode centrale (301), dans lequel le support (15) est stocké dans un boîtier métallique (303) servant comme autre électrode, et les points chauds locaux sont formés localement à des emplacements axiales sur le support (15) de telle sorte que les tôles métalliques (16, 17) et l'électrode centrale (301) soient reliées les unes aux autres uniquement par les emplacements axiaux.

11. Un appareil selon la revendication 10, dans lequel un tronçon isolant (19b, 19c, 19d) est formé au milieu de l'électrode centrale (19) de telle sorte qu'aucun courant ne circule depuis les emplacements axiales où les points chauds locaux sont formés selon la revendication 10 vers le côté aval, vu à partir d'une connexion entre l'électrode centrale (19) et une source de courant, et que les tôles métalliques (16, 17) et l'électrode centrale (19) soient reliées les unes aux autres uniquement par les emplacements axiaux.

12. Un appareil selon la revendication 4, dans lequel le support de catalyseur est préparé en combinant des tôles métalliques plates et ondulées (17, 16) en une bande (18), en recouvrant la bande d'une couche d'isolation et en enroulant la bande, les points chauds locaux sont formés en joignant partiellement électriquement les couches de la bande les unes aux autres et dans lequel les emplacements des raccords entre les tôles ondulées et plates (17, 16) et la zone de chacun des raccords sont choisies de manière optionnelle.

13. Un appareil selon la revendication 4, dans lequel le support de catalyseur (15) est préparé en combinant des tôles métalliques plates et ondulées (302b, 302a) en une bande (302) et en recouvrant la bande d'une couche d'isolation, et la bande (302) est enroulée autour de l'électrode centrale (301), les vallées (321c) de la couche la plus à l'extérieur de la tôle ondulée étant raccordées électriquement à une couche adjacente de la bande (302) afin de former les points chauds locaux.

14. Un appareil selon la revendication 4, dans lequel le support de catalyseur est préparé en combinant des tôles métalliques plates et ondulées (1a, 1b) en une bande, en recouvrant la bande d'une couche d'isolation et en enroulant la bande, les couches de la bande sont jointes localement électriquement l'une à l'autre à partir de l'extérieur afin de former les points chauds locaux, et dans lequel la tôle extérieure parmi les tôles ondulées et plates (1a, 1b) est découpée aux emplacements (A) des points chauds locaux.

15. Un appareil selon la revendication 4, dans lequel les tôles métalliques (16, 17) sont pourvues de couches d'isolation de chaque côté des points chauds locaux.

16. Un appareil selon la revendication 4, dans lequel le support de catalyseur (15) est préparé en disposant par couches stratifiées, de manière alternée, des tôles métalliques ondulées et plates (17, 16) comportant chacune une couche d'isolation de surface, et dans lequel les tôles ondulées et plates adjacentes (17, 16) du support (15) sont partiellement raccordées électriquement les unes aux autres pour former les points chauds locaux.

17. Un appareil selon la revendication 4, dans lequel les points chauds locaux sont répartis et, parmi les points chauds répartis, ceux qui sont les plus proches des électrodes (19, 21) sont connectés électriquement aux électrodes (19, 21).

**18.** Un appareil selon la revendication 4, dans lequel les points chauds locaux sont répartis, et les longueurs des points chauds dans la direction axiale du support de catalyseur (15) sont modifiées en fonction des emplacements des points chauds dans le support (15).

**19.** Un appareil selon la revendication 4, dans lequel le support de catalyseur est préparé en combinant des tôles métalliques ondulées et plates (17, 16) en une bande (18), et le nombre de raccords entre les tôles ondulées et plates (17, 16) à proximité des points chauds locaux est inférieur à celui des autres parties, afin d'offrir une structure souple.

**20.** Un appareil selon la revendication 1, dans lequel la longueur de chacun des points chauds locaux est très courte dans la direction d'écoulement de gaz d'échappement dans le passage d'échappement du moteur en comparaison de la longueur du support de catalyseur (15) dans la même direction.

**21.** Un appareil selon la revendication 20, dans lequel le support de catalyseur (15) est pourvu de fentes (510) orientées dans la direction d'écoulement des gaz d'échappement de telle sorte que les parties restantes du support (15) puissent former les points chauds locaux.

**22.** Un appareil selon la revendication 21, dans lequel le support de catalyseur (15) est réalisé en disposant par couches stratifiées, de manière alternée, des tôles métalliques (16, 17) et des couches d'isolation, les fentes (510) sont formées sur des parties sans contact par rapport aux couches adjacentes, et les couches d'isolation sont insérées dans les fentes (510).

Fig.1

Fig.2

Fig.3

# Fig.4

# Fig.5

# Fig.6

QUANTITY OF
DISCHARGED HC

b

a

ENGINE SPEED

START                    TIME

EP 0 604 868 B1

# Fig.7

# Fig.8

27

Fig.9

Fig.10

Fig.11

Fig.12(a)

Fig.12(b)

# Fig.13

# Fig.14

# Fig.15

# Fig.16

Fig.17

Fig.18

Fig.19

Fig.20

Fig.21(a)

Fig.21(b)

# Fig.22

# Fig.23

# Fig.24

# Fig.25

DURABILITY TEST

PURIFYING CAPACITY

AFFECTED CATALYST

DISTANCE FROM UPSTREAM END

# Fig.26

110

103

# Fig.27

# Fig.28

Fig.29

Fig.30

# Fig.31(a)

# Fig.31(b)

## Fig.32

## Fig.33

# Fig.34

# Fig.35

Fig.36(a)

Fig.36(b)

Fig.37(a)

Fig.37(b)

# Fig.38

# Fig.39

# Fig.40

# Fig.41

# Fig.42

# Fig.43

# Fig.44

SECTION B-B

233a ~ 233b

233

# Fig.45

SECTION D-D

233b'

233a' 233

# Fig.46

SECTION E-E

233b'

233a' 232

# Fig.47

301

303

302

305    304

# Fig.48

304    302b    303    302a

# Fig.49

302b    304

302a

**Fig.50**

$R_T$

R

r

R

- - -

r

R

301

R: RESISTANCE OF JOINT
r: RESISTANCE OF FLAT AND
   CORRUGATED SHEETS

$$R_T = n \cdot R + (n-1) \cdot r$$

**Fig.51**

304  321  322  303

**Fig.52**

301  302a

302b  302

## Fig.53(a)

304    303

## Fig.53(b)

321c    304    321
322c    322

## Fig.54

305
304    306    302
304
304

## Fig.55(a)

303
304a
301
302

## Fig.55(b)

303
304a    304b
302
301

# Fig.56

# Fig.57

# Fig.58(a)  Fig.58(b)

$$R_H = n \cdot R + (n-1) \cdot r + r' + r''$$

$$R_H = (n+2) \cdot R + (n-1) \cdot r$$

# Fig.59

# Fig.60(a)   Fig.60(b)

## Fig.61(a)

401b    405

## Fig.61(b)

405    406

## Fig.61(c)

412    407    405

# Fig. 62

# Fig. 63(a)

# Fig. 63(b)

# Fig.64

501
504
503

502

507

B A B

# Fig.65

B     A

$R_B$   $R_A$   V

$Q_A = V^2/R_A$

$Q_B = V^2/R_B$

# Fig.66

505

B

A

B

507

# Fig.67

506

B

A

B

507

# Fig.68

501

502

C''

C'

C'

C''

# Fig.69

505'

C'  C"

# Fig.70

506'

C'  C"

# Fig.71

501
504
503
502
510
B

# Fig.72

501

A

B

510

# Fig.73(a)

P    P    B

C

A

# Fig.73(b)  Fig.73(c)

1b                1b

1a                1a

# Fig.74

# Fig.75(a)

# Fig.75(b)

# Fig.75(c)

# Fig.76

# Fig.77

# Fig.78

# Fig.79

HEAT QUANTITY AND OPTIMUM DISTANCE

EP 0 604 868 B1

# Fig. 80(a)

# Fig. 80(b)

# Fig. 80(c)

# Fig. 81

# Fig. 82(a)  Fig. 82(b)

# Fig. 83

EP 0 604 868 B1

Fig. 84

1b

A

560

562

564

Fig. 85(a)

564

1b

560

Fig. 85(b)   Fig. 85(c)

560   1b   562

1b

564   560

63

# Fig. 86

# Fig. 87

# Fig.88(a)

# Fig.88(b)

# Fig.89(a)

UPSTREAM SIDE

~602

DOWNSTREAM SIDE

# Fig.89(c)

# Fig.89(b)

UPSTREAM SIDE

~603

DOWNSTREAM SIDE

601

# Fig.90

601

602

603

# Fig.91

607

602

603

607

# Fig.92

607

601

# Fig.93

# Fig.94

# Fig.95

# Fig.96

# Fig.97

# Fig.98(a)  Fig.98(b)

EQUIDISTANT ARRANGEMENT

VARIABLE DISTANCE
ARRANGEMENT